# EUROPEAN PATENT SPECIFICATION

(11) **EP 3 127 973 B1**
(45) Date of publication and mention of the grant of the patent: **03.04.2019**
(21) Application number: 15180186.7
(22) Date of filing: 07.08.2015
(51) Int. Cl.: C09J 7/00

(54) **THERMALLY CONDUCTIVE PRESSURE SENSITIVE ADHESIVE**
WÄRMELEITENDES DRUCKEMPFINDLICHES HAFTMITTEL
ADHÉSIF SENSIBLE À LA PRESSION THERMOCONDUCTEUR

(43) Date of publication of application: 08.02.2017
(73) Proprietor: 3M Innovative Properties Company, St. Paul, MN 55133-3427 (US)
(72) Inventor: Wieneke, Mr. Jan, 41453 Neuss (DE); Rieder-Otterburg, Susanne, 41453 Neuss (DE); Kuester, Frank, 41453 Neuss (DE); Raynoschek, Simone, 41453 Neuss (DE); Kayser, Armin, 87437 Kempten (DE); Uibel, Krishna, 87437 Kempten (DE)
(74) Representative: Gabriel, Kiroubagaranne

(56) References cited:
- EP-A1- 2 392 628
- WO-A1-2004/108851

## Description

### Technical Field

The present disclosure relates generally to the field of pressure sensitive adhesives (PSA), more specifically to the field of thermally conductive pressure sensitive adhesives. The present disclosure also relates to a method of manufacturing such pressure sensitive adhesives and uses thereof.

### Background

Adhesives have been used for a variety of marking, holding, protecting, sealing and masking purposes. Adhesive tapes generally comprise a backing, or substrate, and an adhesive. One type of adhesive which is particularly preferred for many applications is represented by pressure sensitive adhesives.

Pressure sensitive adhesives (PSAs) are well known to one of ordinary skill in the art, and according to the Pressure-Sensitive Tape Council, PSAs are known to possess properties including the following: (1) aggressive and permanent tack, (2) adherence with no more than finger pressure, (3) sufficient ability to hold onto an adherent, and (4) sufficient cohesive strength to be removed cleanly from the adherent. Materials that have been found to function well as PSAs include polymers designed and formulated to exhibit the requisite viscoelastic properties resulting in a desired balance of tack, peel adhesion, and shear holding power. PSAs are characterized by being normally tacky at room temperature (e.g., 20°C). PSAs do not embrace compositions merely because they are sticky or adhere to a surface.

These requirements are assessed generally by means of tests which are designed to individually measure tack, adhesion (peel strength), and cohesion (shear holding power), as noted in A.V. Pocius in Adhesion and Adhesives Technology: An Introduction, 2nd Ed., Hanser Gardner Publication, Cincinnati, OH, 2002. These measurements taken together constitute the balance of properties often used to characterize a PSA.

With broadened use of pressure-sensitive adhesive tapes over the years, performance requirements have become more demanding. In that context, pressure sensitive adhesives combining acceptable thermal conductivity and reasonable adhesive properties have been developed for use in particular in the assembly of electronic components. For example, heat-conductive pressure sensitive adhesives may be used for the attachment of heat sinks to a variety of electronic components such as e.g. integrated circuits, hybrid packages, multi-chip modules or photovoltaic concentrator cells. The function of the heat-conductive pressure sensitive adhesives in these applications is to provide heat transfer medium for the conduction of heat away from heat-sensitive electronic components to the heat sink. Thermally conductive pressure sensitive adhesives suitable for use in these applications are described e.g. in EP-A1-0 566 093 (Webb et al.), US Patent No. 6,123,799 (Ohura et al.) or in US-A1-2011/0031435 (Yoda et al.). The disclosed heat-conductive pressure sensitive adhesives generally make use of inorganic thermally conductive fillers.

Recent developments in the automobile industry towards hybrid and electric automobiles have seen the emergence of high powered batteries having in particular high-voltage, high-energy capacity and high-energy density. These high powered batteries, which are generally made of a plurality of cells connected in series or in parallel, require efficient thermal management (cooling and/or heating) to maintain the performance and the lifetime of the battery in various thermal conditions. A solution for achieving appropriate cooling for a high battery pack is described in EP-A1-2 492 991 (Terada et al.) which makes use of a three-layer laminated structure functioning as a thermally conductive member and meant to be arranged between battery cells when assembling the battery cells into a battery pack.

When used in the manufacturing of high powered batteries, in particular for connecting a plurality of battery cells, a pressure sensitive adhesive composition shall not only provide excellent adhesive properties, but should also provide excellent thermal conductivity, in particular high through-plane thermal conductivity, so as to ensure efficient heat dissipation or distribution.

Without contesting the technical advantages associated with the adhesive solutions known in the art, there is still a need for a pressure sensitive adhesive composition combining excellent adhesion properties and excellent through-plane thermal conductivity. Other advantages of the adhesive compositions and methods of the disclosure will be apparent from the following description.

### Summary

According to one aspect, the present disclosure relates to a thermally conductive pressure sensitive adhesive composition, comprising:
a) an acrylic polymer component; and
b) a boron nitride mixture composition comprising:
   i. a first type of hexagonal boron nitride primary particle agglomerates having a first average agglomerate size d₅₀ comprised between 100 and 420 µm;
   ii. optionally, hexagonal boron nitride primary particles having an average primary particle size d₅₀ comprised between 3 and 25 µm;
   iii. optionally, a second type of hexagonal boron nitride primary particle agglomerates having a second average agglomerate size d₅₀ which is lower than the first average agglomerate size d₅₀;
   iv. optionally, a third type of hexagonal boron nitride primary particle agglomerates having a third average agglomerate size d₅₀, wherein the third average agglomerate size d₅₀ is lower than the first average agglomerate size d₅₀ and is different from second average agglomerate size d₅₀; and
wherein the hexagonal boron nitride primary particles have a platelet shape; wherein the envelope density of the first type of agglomerates, and optionally, the second type of agglomerates and the third type of agglomerates, are comprised between 0.3 and 2.2 g/cm³, when measured according to the test method described in the experimental section; and wherein the content of the boron nitride mixture composition is greater than 15 vol%, based on the volume of the thermally conductive pressure sensitive adhesive composition.

In another aspect, the present disclosure is directed to a method of manufacturing a thermally conductive pressure sensitive adhesive, which comprises the steps of:
a) providing a (co)polymerizable material comprising a (meth)acrylate ester monomer; and optionally, a co-monomer having an ethylenically unsaturated group;
b) polymerizing the (co)polymerizable material comprising a (meth)acrylate ester monomer, thereby forming a (co)polymerized material having a coatable viscosity;
c) providing a boron nitride mixture composition comprising:
   i. a first type of hexagonal boron nitride primary particle agglomerates having a first average agglomerate size d₅₀ comprised between 100 and 420 µm;
   ii. optionally, hexagonal boron nitride primary particles having an average primary particle size d₅₀ comprised between 3 and 25 µm;
   iii. optionally, a second type of hexagonal boron nitride primary particle agglomerates having a second average agglomerate size d₅₀ which is lower than the first average agglomerate size d₅₀;
   iv. optionally, a third type of hexagonal boron nitride primary particle agglomerates having a third average agglomerate size d₅₀, wherein the third average agglomerate size d₅₀ is lower than the first average agglomerate size d₅₀ and is different from second average agglomerate size d₅₀; and
   wherein the hexagonal boron nitride primary particles have a platelet shape; wherein the envelope density of the first type of agglomerates, and optionally, the second type of agglomerates and the third type of agglomerates, are comprised between 0.3 and 2.2 g/cm³, when measured according to the test method described in the experimental section; and wherein the content of the boron nitride mixture composition is greater than 15 vol%, based on the volume of the thermally conductive pressure sensitive adhesive composition;
d) blending the boron nitride mixture composition and the (co)polymerized material, thereby forming a homogeneous coatable composition;
e) coating the coatable composition onto a substrate thereby forming a layer of a thermally conductive pressure sensitive adhesive; and
f) optionally, curing the layer of the thermally conductive pressure sensitive adhesive.

According to still another aspect, the present disclosure relates to the use of a thermally conductive pressure sensitive adhesive composition as described above for industrial applications, in particular for thermal management applications.

### Detailed description

According to a first aspect, the present disclosure relates to a thermally conductive pressure sensitive adhesive composition, comprising:
a) an acrylic polymer component; and
b) a boron nitride mixture composition comprising:
   i. a first type of hexagonal boron nitride primary particle agglomerates having a first average agglomerate size d₅₀ comprised between 100 and 420 µm;
   ii. optionally, hexagonal boron nitride primary particles having an average primary particle size d₅₀ comprised between 3 and 25 µm;
   iii. optionally, a second type of hexagonal boron nitride primary particle agglomerates having a second average agglomerate size d₅₀ which is lower than the first average agglomerate size d₅₀;
   iv. optionally, a third type of hexagonal boron nitride primary particle agglomerates having a third average agglomerate size d₅₀, wherein the third average agglomerate size d₅₀ is lower than the first average agglomerate size d₅₀ and is different from second average agglomerate size d₅₀; and
   wherein the hexagonal boron nitride primary particles have a platelet shape; wherein the envelope density of the first type of agglomerates, and optionally, the second type of agglomerates and the third type of agglomerates, are comprised between 0.3 and 2.2 g/cm³, when measured according to the test method described in the experimental section; and wherein the content of the boron nitride mixture composition is greater than 15 vol%, based on the volume of the thermally conductive pressure sensitive adhesive composition.

In the context of the present disclosure, it has been surprisingly found that a thermally conductive pressure sensitive adhesive composition as described above, in particular a composition comprising a boron nitride mixture composition as detailed above, provides excellent through-plane thermal conductivity combined with excellent adhesion characteristics.

Without wishing to be bound by theory, it is believed that this excellent through-plane thermal conductivity is due in particular to the presence of the first type of hexagonal boron nitride primary particle agglomerates having a relatively large average agglomerate size d₅₀ (comprised between 100 and 420 µm) and a selected range of envelope density as specified above. These first large type of hexagonal boron nitride primary particle agglomerates are believed to form thermal conduction pathways through the z-direction of the pressure sensitive adhesive material layer, whereby the hexagonal boron nitride primary particle agglomerates are in direct physical contact to each other, thus providing excellent thermal percolation through the pressure sensitive adhesive material layer. The platelet shape of the hexagonal boron nitride primary particles forming the first agglomerates is also believed to advantageously contribute to the excellent through-plane thermal conductivity provided by the thermally conductive pressure sensitive adhesive composition of the present disclosure. When the boron nitride mixture composition further comprises optional hexagonal boron nitride primary particles having an average primary particle size d₅₀ comprised between 3 and 25µm and/or other types of hexagonal boron nitride primary particle agglomerates, it is believed that these additional particles or agglomerates contribute in forming additional thermal conduction pathways through the z-direction of the pressure sensitive adhesive material layer. The additional particles or agglomerates are believed to "cross-bridge" the first large type of hexagonal boron nitride primary particle agglomerates, thereby improving the overall through-plane thermal conductivity.

In the context of the present disclosure, the expression "through-plane thermal conductivity" is meant to designate thermal conductivity through the direction perpendicular to the plane formed by the pressure sensitive adhesive material layer (z-direction). In contrast, the expression "in-plane thermal conductivity" is meant to designate thermal conductivity within the plane formed by the pressure sensitive adhesive material layer (x-y direction).

In the context of the present disclosure, the expression "hexagonal boron nitride primary particle agglomerate" is meant to designate an assembly of hexagonal boron nitride primary particles rigidly joined together by fusion, sintering, growth or by using a binder. Particle agglomerates are typically not easily dispersed. In contrast, the expression "hexagonal boron nitride primary particle aggregate" is meant to designate an assembly of hexagonal boron nitride primary particles, wherein the particles are loosely attached together by contact. Particle aggregates are typically easily dispersed.

The thermally conductive pressure sensitive adhesive compositions of the present disclosure are outstandingly suitable for thermal management applications. As such, the thermally conductive pressure sensitive adhesive compositions of the present disclosure are particularly suited for transportation and electronic market applications, in particular automotive and aerospace applications.

The thermally conductive pressure sensitive adhesive compositions of the present disclosure are further characterized by excellent adhesion characteristics, in particular peel adhesion performance.

The thermally conductive pressure sensitive adhesive composition of the present disclosure comprises, as a first technical feature, an acrylic polymer component. Acrylic polymer components for use herein are not particularly limited. Any acrylic polymer component commonly known in the art may be used in the context of the present disclosure. Suitable acrylic polymer components for use herein will be easily identified by those skilled in the art, in the light of the present description. Exemplary acrylic polymer components for use herein are described in EP-A1-0 566 093 (Webb et al.) or in US-A1-2011/0031435 (Yoda et al.), the content of which is herewith fully integrated by reference. In the context of the present disclosure, the expressions "acrylic polymer" and "polyacrylate" may be used interchangeably.

Typically, the acrylic polymer component for use herein is the polymerization reaction product of a (co)polymerizable material comprising a (meth)acrylate ester monomer, and optionally, a co-monomer having an ethylenically unsaturated group.

In a typical aspect, the (meth)acrylate ester monomer for use herein for use herein comprise C₁-C₃₂ (meth)acrylic acid ester monomer units. Suitable C₁-C₃₂ (meth)acrylic acid ester monomer units for use herein may be easily identified by those skilled in the art, in the light of the present disclosure.

In a typical aspect, the (meth)acrylate ester monomer units for use herein comprises linear or branched alkyl (meth)acrylate ester, preferably a non-polar linear or branched alkyl (meth)acrylate ester having a linear or branched alkyl group comprising from 1 to 32 carbon atoms.

In a particular aspect of the present disclosure, the C₁-C₃₂ (meth)acrylic acid ester monomer units for use herein are selected from the group of C₁-C₂₅ (meth)acrylic acid ester monomer units, C₁-C₂₀ (meth)acrylic acid ester monomer units, C₁-C₁₈ (meth)acrylic acid ester monomer units, C₂-C₁₆ (meth)acrylic acid ester monomer units, C₂-C₁₄ (meth)acrylic acid ester monomer units, or even C₂-C₁₄ (meth)acrylic acid ester monomer units.

In another particular aspect, the C₁-C₃₂ (meth)acrylic acid ester monomer units for use herein are selected from the group of C₄-C₃₀ (meth)acrylic acid ester monomer units, C₄-C₁₄ (meth)acrylic acid ester monomer units, or even from the group of C₄-C₁₂ (meth)acrylic acid ester monomer units.

According to another particular aspect of the present disclosure, the C₁-C₃₂ (meth)acrylic acid ester monomer units are selected from the group consisting of C₄-C₁₂ (meth)acrylic acid ester monomer units, preferably from the group consisting of iso-octyl (meth)acrylate, 2-ethylhexyl (meth)acrylate, 2-propylheptyl (meth)acrylate, 2-octyl (meth)acrylate, butyl acrylate, and any combinations or mixtures thereof; more preferably from the group consisting of iso-octyl acrylate, 2-ethylhexyl acrylate, 2-octyl acrylate, and 2-propylheptyl acrylate.

In a preferred aspect of the present disclosure, the C₁-C₃₂ (meth)acrylic acid ester monomer units are selected from the group consisting of isooctyl acrylate, 2-ethylhexyl acrylate, and any combinations or mixtures thereof.

The C₁-C₃₂ (meth)acrylic acid ester monomer units for use herein may be present in the acrylic polymer component in any suitable amounts. In some exemplary aspects, the C₁-C₃₂ (meth)acrylic acid ester monomer units for use herein may be present in the acrylic polymer component in an amount of from 45 wt% to 99 wt%, based on the weight of the acrylic polymer component.

In a particular aspect, the (co)polymerizable material useful for preparing the acrylic polymer component for use herein, further comprises a co-monomer having an ethylenically unsaturated group and copolymerizable with the (meth)acrylate ester monomer units.

According to an advantageous aspect, the co-monomer having an ethylenically unsaturated group is a polar co-monomer, preferably a polar acrylate, more preferably selected from the group consisting of acrylic acid, methacrylic acid, itaconic acid, hydroxyalkyl acrylates, acrylamides and substituted acrylamides, acrylamines and substituted acrylamines and any combinations or mixtures thereof. Preferably, the co-monomer having an ethylenically unsaturated group for use herein is selected from the group consisting of acrylic acid, methacrylic acid, itaconic acid and hydroxyalkyl acrylates. More preferably, the co-monomer having an ethylenically unsaturated group is selected to be acrylic acid.

The co-monomer units having an ethylenically unsaturated group may be present in the acrylic polymer component in any suitable amounts. In some exemplary aspects, the co-monomer units having an ethylenically unsaturated group for use herein may be present in the acrylic polymer component in an amount of from 1 wt% to 15 wt%, based on the weight of the acrylic polymer component.

In a particular aspect, the acrylic polymer component for use herein comprises:
a) from 45 wt% to 99 wt% of C₁-C₃₂ (meth)acrylic acid ester monomer units, based on the weight of the acrylic polymer component;
b) from 1 wt% to 15 wt% of co-monomers having an ethylenically unsaturated group, based on the weight of the acrylic polymer component; and
c) optionally, from 0 wt% to 40 wt% of further ethylenically unsaturated polar monomer units which are copolymerizable with monomer units (a) and/or (b), based on the weight of the acrylic polymer component.

In a preferred aspect, the (co)polymerizable material for making the acrylic polymer component for use herein, comprises a mixture of 2-ethylhexyl acrylate and acrylic acid monomer units.

In the context of the present disclosure, the acrylic polymer component for use herein may be present in the pressure sensitive adhesive composition in any suitable amounts. In some exemplary aspects, the acrylic polymer component may be present in the pressure sensitive adhesive composition in an amount of from 20 wt% to 90 wt%, from 20 wt% to 70 wt%, from 25 wt% to 60 wt%, or even from 25 wt% to 50 wt% based on the weight of the pressure sensitive adhesive composition.

The acrylic polymer component for use herein may be prepared by processes familiar to the skilled person, with particular advantage by conventional free-radical polymerizations or controlled radical polymerizations. A variety of conventional free radical polymerization methods, including solution, bulk (i.e., with little or no solvent), dispersion, emulsion, and suspension processes, which processes are familiar to the skilled person. The particular method used may be influenced by the use of the final pressure sensitive adhesive composition. The reaction product of the polymerizable material can be random or block copolymers. The polyacrylates may be prepared by copolymerization of the monomeric components using the usual polymerization initiators and also, where appropriate, regulators (chain transfer agents), with polymerization taking place at the customary temperatures in bulk, in emulsion, such as in water or liquid hydrocarbons, for example, or in solution.

In an advantageous aspect, the acrylic polymer component is prepared by polymerization of the monomers in solvents, more particularly in solvents with a boiling range from 50 to 150°C or from 60 to 120° C, using the customary amounts of polymerization initiators, these generally being 0.01% to 5%, more particularly 0.1% to 2%, by weight (based on the total weight of the monomers).

In some other methods of preparing the acrylic polymer component for use herein, the (co)polymerizable material containing the monomers is partially (co)polymerized so as to increase its viscosity to that corresponding to a viscous material. Generally, the main monomers and other optional monomers are mixed with a portion of the free radical polymerization initiator. Depending on the type of initiator added, the mixture is typically exposed to actinic radiation or heat to partially polymerize the monovalent monomers (i.e., monomers with a single ethylenically unsaturated group). In an advantageous aspect, the (co)polymerizable material containing the monomers is partially polymerized so as to obtain a material having a relatively low viscosity. This low viscosity enables blending the boron nitride mixture into the (co)polymerized material while minimizing the damages to the boron nitride mixture due to the mechanical blending.

The thermally conductive pressure sensitive adhesive composition of the present disclosure comprises, as a second technical feature, a boron nitride mixture composition comprising:
i. a first type of hexagonal boron nitride primary particle agglomerates having a first average agglomerate size d₅₀ comprised between 100 and 420 µm;
ii. optionally, hexagonal boron nitride primary particles having an average primary particle size d₅₀ comprised between 3 and 25µm;
iii. optionally, a second type of hexagonal boron nitride primary particle agglomerates having a second average agglomerate size d₅₀ which is lower than the first average agglomerate size d₅₀;
iv. optionally, a third type of hexagonal boron nitride primary particle agglomerates having a third average agglomerate size d₅₀, wherein the third average agglomerate size d₅₀ is lower than the first average agglomerate size d₅₀ and is different from second average agglomerate size d₅₀; and
wherein the hexagonal boron nitride primary particles have a platelet shape; wherein the envelope density of the first type of agglomerates, and optionally, the second type of agglomerates and the third type of agglomerates, are comprised between 0.3 and 2.2 g/cm³, when measured according to the test method described in the experimental section; and wherein the content of the boron nitride mixture composition is greater than 15 vol%, based on the volume of the thermally conductive pressure sensitive adhesive composition.

Hexagonal boron nitride primary particles having an average primary particle size dso comprised between 3 and 25µm, as well as the various boron nitride primary particle agglomerates for use herein may be purchased from the 3M Company under commercial designation 3M™ Boron Nitride Cooling Fillers, in particular 3M™ Boron Nitride Cooling Platelets, 3M™ Boron Nitride Cooling Agglomerates and 3M™ Boron Nitride Cooling Flakes.

Alternatively, hexagonal boron nitride primary particles having an average primary particle size d₅₀ comprised between 3 and 25µm, as well as the various boron nitride primary particle agglomerates for use herein may be obtained according to techniques well known to those skilled in the art.

According to a particular aspect of the thermally conductive pressure sensitive adhesive composition, the first type of agglomerates, and optionally, the second type of agglomerates and the third type of agglomerates, are obtained by heat treatment. Exemplary heat treatment steps include, but are not limited to, high-temperature annealing, fusion, sintering, and any combinations thereof, with or without using an inorganic binder phase.

According to an advantageous aspect, the thermally conductive pressure sensitive adhesive composition of the present disclosure comprises a boron nitride mixture composition in an amount greater than 18 vol%, greater than 20 vol%, greater than 22 vol%, or even greater than 24 vol%, based on the volume of the thermally conductive pressure sensitive adhesive composition.

While an amount of boron nitride mixture composition greater than 15 vol%, based on the volume of the thermally conductive pressure sensitive adhesive composition, already provides excellent through-plane thermal conductivity characteristics to the thermally conductive pressure sensitive adhesive composition, amounts of boron nitride mixture composition greater than 18 vol%, greater than 20 vol%, greater than 22 vol%, or even greater than 24 vol%, typically provide improved through-plane thermal conductivity performance while preserving excellent adhesive properties of the thermally conductive pressure sensitive adhesive composition.

Without wishing to be bound by theory, it is believed that an increased loading of the corresponding boron nitride mixture within the thermally conductive pressure sensitive adhesive composition, advantageously affects the forming of thermal conduction pathways through the z-direction of the pressure sensitive adhesive material layer by enhancing the creation of direct physical contact between the various types of hexagonal boron nitride primary particles and agglomerates present in the thermally conductive pressure sensitive adhesive composition, thus providing improved thermal percolation through the pressure sensitive adhesive material layer.

Accordingly, in a beneficial aspect of the thermally conductive pressure sensitive adhesive composition according to the present disclosure, the first type of agglomerates, and optionally, the second type of agglomerates, the third type of agglomerates and the hexagonal boron nitride primary particles, are, at least partially, in direct physical contact to each other within the thermally conductive pressure sensitive adhesive composition. Direct physical contact between hexagonal boron nitride primary particles and agglomerates may be easily observed by e.g. Scanning Electron Microscopy (SEM).

According to a particular aspect of the present disclosure, the thermally conductive pressure sensitive adhesive composition comprises a boron nitride mixture composition in an amount no greater than 45 vol%, no greater than 40 vol%, no greater than 35 vol%, or even no greater than 30 vol%, based on the volume of thermally conductive pressure sensitive adhesive composition.

According to another particular aspect of the present disclosure, the thermally conductive pressure sensitive adhesive composition comprises a boron nitride mixture composition in an amount comprised between 15 and 50 vol%, between 16 and 40 vol%, between 18 and 35 vol%, between 18 and 30 vol%, between 20 and 35 vol%, between 20 and 30 vol%, between 22 and 28 vol%, or even between 22 and 26 vol%, based on the volume of thermally conductive pressure sensitive adhesive composition.

In a typical aspect of the present disclosure, the thermally conductive pressure sensitive adhesive composition comprises the first type of agglomerates in an amount greater than 4 vol%, greater than 5 vol%, greater than 10 vol%, or even greater than 15 vol%, based on the volume of the thermally conductive pressure sensitive adhesive composition.

In another typical aspect of the present disclosure, the thermally conductive pressure sensitive adhesive composition comprises the first type of agglomerates in an amount greater than 10 wt%, greater than 15 wt%, greater than 20wt%, greater than 25 wt%, greater than 30 wt%, greater than 50 wt%, or even greater than 70 wt%, based on the weight of the boron nitride mixture composition.

In still another typical aspect of the present disclosure, the thermally conductive pressure sensitive adhesive composition comprises the first type of agglomerates in an amount comprised between 10 and 90 wt%, between 10 and 70 wt%, between 10 and 50 wt%, between 10 and 40 wt%, between 10 and 35 wt%, between 10 and 30 wt%, or even between 15 and 30 wt%, based on the weight of the boron nitride mixture composition.

According to the present disclosure, the envelope density of the first type of agglomerates, and optionally, the second type of agglomerates and the third type of agglomerates, are advantageously comprised between 0.3 and 2.2 g/cm³, when measured according to the test method described in the experimental section.

Without wishing to be bound by theory, it is believed that the selected range of envelope density as specified above advantageously affects the through-plane thermal conductivity properties of the thermally conductive pressure sensitive adhesive composition according to the present disclosure. Still without wishing to be bound by theory, it is believed that hexagonal boron nitride primary particle agglomerates having envelope density comprised between 0.3 and 2.2 g/cm³, possess suitable porosity ensuring good volume filling effect and thereby good thermal percolation.

According to an advantageous aspect of the thermally conductive pressure sensitive adhesive composition according to the present disclosure, the envelope density of the first type of agglomerates, and optionally, the second type of agglomerates and the third type of agglomerates, are not greater than 2.2, not greater than 2.0 g/cm³, not greater than 1.8 g/cm³, or even not greater than 1.6 g/cm³, when measured according to the test method described in the experimental section.

According to another advantageous aspect of the thermally conductive pressure sensitive adhesive composition according to the present disclosure, the envelope density of the first type of agglomerates, and optionally, the second type of agglomerates and the third type of agglomerates, are independently comprised between 0.3 and 2.0 g/cm³, between 0.3 and 1.7 g/cm³, or even between 0.4 and 1.5 g/cm³, when measured according to the test method described in the experimental section.

In still another advantageous aspect of the thermally conductive pressure sensitive adhesive composition according to the present disclosure, the envelope density of the first type of agglomerates is comprised between 0.5 and 2.2 g/cm³, between 0.8 and 2.2 g/cm³, between 1.0 and 2.0 g/cm³, between 1.4 and 2.0 g/cm³, between 1.6 and 2.0 g/cm³, between 0.3 and 1.7 g/cm³, between 0.4 and 1.5 g/cm³, between 0.5 and 1.5 g/cm³, between 0.5 and 1.2 g/cm³, or even between 0.5 and 1.0 g/cm³, when measured according to the test method described in the experimental section.

Advantageously, the envelope density of the second type of agglomerates for use herein is comprised between 0.3 and 2.2 g/cm³, between 0.5 and 2.2 g/cm³, between 0.8 and 2.2 g/cm³, between 1.0 and 2.0 g/cm³, between 1.4 and 2.0 g/cm³, between 1.6 and 2.0 g/cm³, between 0.3 and 1.7 g/cm³, between 0.4 and 1.5 g/cm³, between 0.5 and 1.5 g/cm³, between 0.5 and 1.2 g/cm³, or even between 0.5 and 1.0 g/cm³, when measured according to the test method described in the experimental section.

Advantageously still, the envelope density of the third type of agglomerates is comprised between 0.3 and 2.2 g/cm³, between 0.5 and 2.2 g/cm³, between 0.8 and 2.2 g/cm³, between 1.0 and 2.0 g/cm³, between 1.4 and 2.0 g/cm³, between 1.6 and 2.0 g/cm³, between 0.3 and 1.7 g/cm³, between 0.4 and 1.5 g/cm³, between 0.5 and 1.5 g/cm³, between 0.5 and 1.2 g/cm³, or even between 0.5 and 1.0 g/cm³, when measured according to the test method described in the experimental section.

In an advantageous aspect of the thermally conductive pressure sensitive adhesive composition, the first average agglomerate size d₅₀ is comprised between 100 and 350 µm, between 100 and 300 µm, between 100 and 250 µm, between 100 and 200 µm, between 100 and 180 µm, between 100 and 170 µm, between 110 and 160 µm, between 110 and 150 µm, or even between 120 and 150 µm.

Still in an advantageous aspect of the thermally conductive pressure sensitive adhesive composition, the second average agglomerate size d₅₀ is comprised between 50 and 95 µm, between 55 and 95 µm, between 60 and 90 µm, or even between 65 and 85 µm.

Yet in an advantageous aspect of the thermally conductive pressure sensitive adhesive composition, the third average agglomerate size d₅₀ is comprised between 10 and 40 µm, between 15 and 40 µm, between 15 and 35 µm, between 20 and 35 µm, or even between 20 and 30 µm.

The average primary particle size d₅₀ and average agglomerate size d₅₀ are typically determined by means of laser diffraction (wet measurement, Mastersizer 2000, Malvern Instruments, Malvern UK).

According to a particular aspect of the thermally conductive pressure sensitive adhesive composition, the first type of agglomerates, and optionally, the second type of agglomerates and the third type of agglomerates, are isotropic agglomerates.

In the context of the present disclosure, the expression "isotropic agglomerate" is meant to designate an agglomerate of particles wherein the particles are oriented in the agglomerate without any preferred direction with respect to one another. In contrast, the expression "anisotropic agglomerate" is meant to designate an agglomerate of particles wherein the particles are arranged in the agglomerate with a preferred orientation with respect to one another.

In the context of the present disclosure, it has been surprisingly found that a pressure sensitive adhesive compositions comprising a boron nitride mixture composition as detailed above and comprising substantially isotropic agglomerates, provide excellent through-plane thermal conductivity while preserving acceptable in-plane thermal conductivity. It was unexpected that isotropic agglomerates (i.e. with substantially unoriented particles) would provide excellent through-plane thermal conductivity (i.e. thermal conductivity through the specific z-direction). Acceptable through-plane thermal conductivity would have rather been expected while using anisotropic agglomerates, wherein the particles are arranged in the agglomerate with a preferred orientation.

According to another particular aspect of the thermally conductive pressure sensitive adhesive composition, the first type of agglomerates, and optionally, the second type of agglomerates and the third type of agglomerates, are anisotropic agglomerates.

According to one advantageous aspect of the thermally conductive pressure sensitive adhesive composition, the first type of agglomerates, and optionally, the second type of agglomerates and/or the third type of agglomerates and/or the hexagonal boron nitride primary particles having an average primary particle size d₅₀ comprised between 3 and 25µm, are not obtained from the same source of boron nitride particles. Advantageously, the various types of particle agglomerates for use herein do not result from the physical processing of a unique source of boron nitride particles, in particular from a unique source of particle agglomerates having a greater average agglomerate size dso. Advantageously still, the various types of particle agglomerates for use herein do not result from in-situ physical processing steps (such as pulverization or any other particle size adjustment or fractioning processing steps) which are and believed to detrimentally affect the through-plane thermal conductivity performance of the resulting thermally conductive pressure sensitive adhesive composition due to the rather destructive nature of these processing steps.

According to a beneficial aspect of the thermally conductive pressure sensitive adhesive composition, the various types of particle agglomerates for use herein originate from distinct sources of boron nitride particles.

According to one preferred aspect of the present disclosure, the thermally conductive pressure sensitive adhesive composition comprises a boron nitride mixture composition comprising:
i. a first type of hexagonal boron nitride primary particle agglomerates having a first average agglomerate size d₅₀ comprised between 100 and 420 µm, between 110 and 400 µm, between 310 and 410 µm, between 200 and 290 µm, or even between 100 and 170 µm, in combination with either:
   1. hexagonal boron nitride primary particles having a primary particle size d₅₀ comprised between 3 and 25 µm, between 5 and 25 µm, between 10 and 20 µm, between 10 and 18 µm, between 12 and 18 µm, or even between 13 and 16 µm; or
   2. a second type of hexagonal boron nitride primary particle agglomerates having a second average agglomerate size d₅₀ which is lower than the first average agglomerate size d₅₀; and
ii. optionally, a third type of hexagonal boron nitride primary particle agglomerates having a third average agglomerate size d₅₀, wherein the third average agglomerate size d₅₀ is lower than the first average agglomerate size d₅₀ and is different from second average agglomerate size d₅₀.

According to another preferred aspect of the present disclosure, the thermally conductive pressure sensitive adhesive composition comprises a boron nitride mixture composition comprising:
i. a first type of hexagonal boron nitride primary particle agglomerates having a first average agglomerate size d₅₀ comprised between 100 and 420 µm, between 110 and 400 µm, between 310 and 410 µm, between 200 and 290 µm, or even between 100 and 170 µm; and
ii. hexagonal boron nitride primary particles having a primary particle size d₅₀ comprised between 3 and 25 µm, between 5 and 25 µm, between 10 and 20 µm, between 10 and 18 µm, between 12 and 18 µm, or even between 13 and 16 µm.

According to still another preferred aspect of the present disclosure, the thermally conductive pressure sensitive adhesive composition comprises a boron nitride mixture composition comprising:
i. a first type of hexagonal boron nitride primary particle agglomerates having a first average agglomerate size d₅₀ comprised between 100 and 420 µm, between 110 and 400 µm, between 310 and 410 µm, between 200 and 290 µm, or even between 100 and 170 µm;
ii. a second type of hexagonal boron nitride primary particle agglomerates having a second average agglomerate size d₅₀ which is lower than the first average agglomerate size d₅₀; and
iii. a third type of hexagonal boron nitride primary particle agglomerates having a third average agglomerate size d₅₀.

According to yet another preferred aspect of the present disclosure, the thermally conductive pressure sensitive adhesive composition comprises a boron nitride mixture composition comprising:
i. a first type of hexagonal boron nitride primary particle agglomerates having a first average agglomerate size d₅₀ comprised between 100 and 420 µm, between 110 and 400 µm, between 310 and 410 µm, between 200 and 290 µm, or even between 100 and 170 µm;
ii. a second type of hexagonal boron nitride primary particle agglomerates having a second average agglomerate size d₅₀ which is lower than the first average agglomerate size d₅₀, and which is comprised between 50 and 95 µm, between 55 and 95 µm, between 60 and 90 µm, or even between 65 and 85 µm; and
iii. a third type of hexagonal boron nitride primary particle agglomerates having a third average agglomerate size d₅₀ which is lower than the first average agglomerate size d₅₀ and different from second average agglomerate size d₅₀, and wherein the third average agglomerate size d₅₀ is comprised between 15 and 45 µm, between 20 and 45 µm, between 25 and 45 µm, between 15 and 35 µm, between 20 and 35 µm, or even between 20 and 30 µm.

The thermally conductive pressure sensitive adhesive compositions according to the present disclosure are characterized by providing excellent balance of properties with respect to through-plane thermal conductivity and adhesive performance. It has been a long-standing recognized challenge in the art to achieve acceptable balance of performance between thermal conductivity and adhesive performance in adhesives, in particular pressure sensitive adhesives. This is due to the fact that both properties are functionally contradictory, as normally good thermal conductivity is achieved through usage of high loading of thermally conductive filler which in turn is known to detrimentally affect the adhesive properties. Similarly, reduced level of thermally conductive filler material will typically improve the adhesive properties at the detriment of the thermal conductivity.

In the context of the present disclosure, it has been surprisingly found that pressure sensitive adhesive compositions comprising a boron nitride mixture composition as described above in an amount greater than 15 vol%, based on the volume of thermally conductive pressure sensitive adhesive composition, already provides excellent balance of properties with respect to through-plane thermal conductivity and adhesive performance. Surprisingly, this excellent balance of properties is maintained with an amount of boron nitride mixture composition no greater than 30 vol%, based on the volume of thermally conductive pressure sensitive adhesive composition. This is in clear contrast with solutions known in the art which generally require using amounts greater than 30 vol%, preferably greater than 40 vol%, to achieve acceptable thermal conductivity in polymeric matrices.

According to a typical aspect, the thermally conductive pressure sensitive adhesive composition of the present disclosure has a through-plane thermal conductivity of at least 0.5 W/mK, at least 0.8 W/mK, at least 1.0 W/mK, at least 1.2 W/mK, at least 1.4 W/mK, or even at least 1.5 W/mK, when measured according to the test method described in the experimental section.

According to another particular of the present disclosure, the thermally conductive pressure sensitive adhesive composition has a through-plane thermal conductivity comprised between 0.5 and 2.0 W/mK, between 0.8 and 1.8 W/mK, between 1.0 and 1.6 W/mK, or even between 1.2 and 1.6 W/mK, when measured according to the test method described in the experimental section.

According to another particular aspect of the present disclosure, the thermally conductive pressure sensitive adhesive composition has a 90° peel strength value of at least 5 N/cm, at least 8 N/cm, at least 10 N/cm, at least 12 N/cm, at least 15 N/cm, at least 18 N/cm, or even at least 20 N/cm, when measured according to the test method described in the experimental section.

According to still another particular aspect of the present disclosure, the thermally conductive pressure sensitive adhesive composition has a 90° peel strength value of comprised between 5 and 30N/cm, between 5 and 25N/cm, between 10 and 25N/cm, or even between 15 and 25N/cm, when measured according to the test method described in the experimental section.

The thermally conductive pressure sensitive adhesive compositions according to the present disclosure may take any suitable form, depending on the targeted application.

According to a preferred aspect of the present disclosure, the thermally conductive pressure sensitive adhesive composition is in the form of a layer having preferably a thickness greater than 400 µm, greater than 500 µm, greater than 800 µm, greater than 1000 µm, greater than 1200 µm, greater than 1500 µm, or even greater than greater than 1800 µm.

According to another preferred aspect of the present disclosure, the thermally conductive pressure sensitive adhesive composition is in the form of a layer having a thickness comprised between 400 and 2000 µm, between 500 and 1800 µm, between 600 and 1500 µm, or even between 800 and 1200 µm.

As such, pressure sensitive adhesive layers having a thickness greater than 400 µm may be referred to as relatively thick layers in the art of pressure sensitive adhesive compositions. Unexpectedly, the excellent balance of properties with respect to through-plane thermal conductivity and adhesive performance provided by the thermally conductive pressure sensitive adhesive compositions of the present disclosure, is maintained in such thick layers of thermally conductive pressure sensitive adhesive composition. Achieving in particular excellent through-plane thermal conductivity in layers of thermally conductive pressure sensitive adhesive composition having a thickness greater than 400 µm is a recognized challenge in the adhesive industry. Thick adhesive layers provided with good through-plane thermal conductivity may find beneficial utility in various industrial applications where thick material is needed to provide specific properties/requirements such as e.g. energy distribution, deforming ability, conformability to rough or irregular substrates, dampening or shock-absorbing effect.

In another aspect, the present disclosure relates to a precursor of a thermally conductive pressure sensitive adhesive comprising:
a) a (co)polymerizable material comprising a (meth)acrylate ester monomer; and optionally, a co-monomer having an ethylenically unsaturated group; and
b) a boron nitride mixture composition comprising:
   i. a first type of hexagonal boron nitride primary particle agglomerates having a first average agglomerate size d₅₀ comprised between 100 and 420 µm;
   ii. optionally, hexagonal boron nitride primary particles having an average primary particle size d₅₀ comprised between 3 and 25 µm;
   iii. optionally, a second type of hexagonal boron nitride primary particle agglomerates having a second average agglomerate size d₅₀ which is lower than the first average agglomerate size d₅₀;
   iv. optionally, a third type of hexagonal boron nitride primary particle agglomerates having a third average agglomerate size d₅₀, wherein the third average agglomerate size d₅₀ is lower than the first average agglomerate size d₅₀ and is different from second average agglomerate size d₅₀; and
   wherein the hexagonal boron nitride primary particles have a platelet shape; wherein the envelope density of the first type of agglomerates, and optionally, the second type of agglomerates and the third type of agglomerates, are comprised between 0.3 and 2.2 g/cm³, when measured according to the test method described in the experimental section; and wherein the content of the boron nitride mixture composition is greater than 15 vol%, based on the volume of the thermally conductive pressure sensitive adhesive composition.

All particular and preferred aspects relating to, in particular, the (co)polymerizable material; the acrylic polymer component; the boron nitride mixture composition, in particular the hexagonal boron nitride primary particle agglomerates and the hexagonal boron nitride primary particles as described above in the context of the thermally conductive pressure sensitive adhesive composition, are fully applicable to the description of the precursor of a thermally conductive pressure sensitive adhesive of the present disclosure.

In still another aspect, the present disclosure relates to a method of manufacturing a thermally conductive pressure sensitive adhesive, which comprises the steps of:
a) providing a (co)polymerizable material comprising a (meth)acrylate ester monomer; and optionally, a co-monomer having an ethylenically unsaturated group;
b) polymerizing the (co)polymerizable material comprising a (meth)acrylate ester monomer, thereby forming a (co)polymerized material having a coatable viscosity;
c) providing a boron nitride mixture composition comprising:
   i. a first type of hexagonal boron nitride primary particle agglomerates having a first average agglomerate size d₅₀ comprised between 100 and 420 µm;
   ii. optionally, hexagonal boron nitride primary particles having an average primary particle size d₅₀ comprised between 3 and 25 µm;
   iii. optionally, a second type of hexagonal boron nitride primary particle agglomerates having a second average agglomerate size d₅₀ which is lower than the first average agglomerate size d₅₀;
   iv. optionally, a third type of hexagonal boron nitride primary particle agglomerates having a third average agglomerate size d₅₀, wherein the third average agglomerate size d₅₀ is lower than the first average agglomerate size d₅₀ and is different from second average agglomerate size d₅₀; and
   wherein the hexagonal boron nitride primary particles have a platelet shape; wherein the envelope density of the first type of agglomerates, and optionally, the second type of agglomerates and the third type of agglomerates, are comprised between 0.3 and 2.2 g/cm³, when measured according to the test method described in the experimental section; and wherein the content of the boron nitride mixture composition is greater than 15 vol%, based on the volume of the thermally conductive pressure sensitive adhesive composition;
d) blending the boron nitride mixture composition and the (co)polymerized material, thereby forming a homogeneous coatable composition;
e) coating the coatable composition onto a substrate thereby forming a layer of a thermally conductive pressure sensitive adhesive; and
f) optionally, curing the layer of the thermally conductive pressure sensitive adhesive.

All particular and preferred aspects relating to, in particular, the (co)polymerizable material; the acrylic polymer component; the boron nitride mixture composition, in particular the hexagonal boron nitride primary particle agglomerates and the hexagonal boron nitride primary particles as described above in the context of the thermally conductive pressure sensitive adhesive composition, are fully applicable to the description of the method of manufacturing a thermally conductive pressure sensitive adhesive of the present disclosure.

According to an advantageous aspect of the method of manufacturing a thermally conductive pressure sensitive adhesive, the first type of agglomerates, and optionally, the second type of agglomerates and/or the third type of agglomerates and/or the hexagonal boron nitride primary particles having an average primary particle size d₅₀ comprised between 3 and 25µm, are not obtained from the same source of boron nitride particles. Advantageously, the various types of particle agglomerates for use herein do not result from the physical processing of a unique source of boron nitride particles, in particular from a unique source of particle agglomerates having a greater average agglomerate size d₅₀. Advantageously still, the various types of particle agglomerates for use herein do not result from in-situ physical processing steps, such as e.g. pulverization or any other particle size adjustment or fractioning processing steps.

According to a beneficial aspect of the method of manufacturing a thermally conductive pressure sensitive adhesive, the various types of particle agglomerates for use herein originate from distinct sources of boron nitride particles.

In an advantageous aspect of the present disclosure, the method of manufacturing a thermally conductive pressure sensitive adhesive is free of any (in-situ) physical processing steps, such as e.g. pulverization or any other particle size adjustment or fractioning processing steps, aimed at producing the various types of particle agglomerates for use herein from a unique source of boron nitride particles.

According to a particular aspect of the method of manufacturing a thermally conductive pressure sensitive adhesive, the (meth)acrylate ester monomer is selected from the group consisting of iso-octyl (meth)acrylate, 2-ethylhexyl (meth)acrylate, 2-propylheptyl (meth)acrylate, 2-octyl (meth)acrylate, butyl acrylate, and any combinations or mixtures thereof; more preferably from the group consisting of iso-octyl acrylate, 2-ethylhexyl acrylate, 2-octyl acrylate, and 2-propylheptyl acrylate.

According to another particular aspect of the method of manufacturing a thermally conductive pressure sensitive adhesive, the co-monomer having an ethylenically unsaturated group is a polar comonomer Preferably, the co-monomer having an ethylenically unsaturated group is a polar acrylate, more preferably selected from the group consisting of acrylic acid, methacrylic acid, itaconic acid, hydroxyalkyl acrylates, acrylamides and substituted acrylamides, acrylamines and substituted acrylamines and any combinations or mixtures thereof. Even more preferably, the co-monomer having an ethylenically unsaturated group for use herein is selected from the group consisting of acrylic acid, methacrylic acid, itaconic acid and hydroxyalkyl acrylates.

In a preferred aspect of the method of manufacturing a thermally conductive pressure sensitive adhesive, the (co)polymerizable material for making the acrylic polymer component for use herein, comprises a mixture of 2-ethylhexyl acrylate and acrylic acid monomer units.

In still another aspect, the present disclosure is further directed to the use of a thermally conductive pressure sensitive adhesive composition as described above for industrial applications, in particular for thermal management applications. In a particular aspect, the thermally conductive pressure sensitive adhesive composition of the present disclosure may be used for thermal interface management.

The thermally conductive pressure sensitive adhesive compositions of the present disclosure are particularly suited for transportation and electronic market applications, in particular automotive and aerospace applications, due to the excellent balance of adhesion properties and through-plane thermal conductivity provided.

The thermally conductive pressure sensitive adhesive compositions of the present disclosure, in particular pressure sensitive adhesive composition layers having a thickness greater than 400 µm, are outstandingly suitable for battery pack bonding, in particular as a thermally conductive member for bonding battery cells.

In a particular aspect, the thermally conductive pressure sensitive adhesive composition may be used for bonding pack of cells in a battery pack device, in particular in high powered batteries used for automotive and aerospace applications. Pressure sensitive adhesive composition layers according to the present disclosure and having a thickness greater than 400 µm may beneficially exploit advantageous properties such as e.g. energy distribution, deforming ability, conformability to rough or irregular substrates, dampening effect, vibration or shock-absorbing effect.

Item 1 is a thermally conductive pressure sensitive adhesive composition, comprising:
a) an acrylic polymer component; and
b) a boron nitride mixture composition comprising:
   i. a first type of hexagonal boron nitride primary particle agglomerates having a first average agglomerate size d₅₀ comprised between 100 and 420 µm;
   ii. optionally, hexagonal boron nitride primary particles having an average primary particle size d₅₀ comprised between 3 and 25µm;
   iii. optionally, a second type of hexagonal boron nitride primary particle agglomerates having a second average agglomerate size d₅₀ which is lower than the first average agglomerate size d₅₀;
   iv. optionally, a third type of hexagonal boron nitride primary particle agglomerates having a third average agglomerate size d₅₀, wherein the third average agglomerate size d₅₀ is lower than the first average agglomerate size d₅₀ and is different from second average agglomerate size d₅₀; and
   wherein the hexagonal boron nitride primary particles have a platelet shape; wherein the envelope density of the first type of agglomerates, and optionally, the second type of agglomerates and the third type of agglomerates, are comprised between 0.3 and 2.2 g/cm³, when measured according to the test method described in the experimental section; and wherein the content of the boron nitride mixture composition is greater than 15 vol%, based on the volume of the thermally conductive pressure sensitive adhesive composition.

Item 2 is the thermally conductive pressure sensitive adhesive composition according to item 1, which comprises a boron nitride mixture composition in an amount greater than 18 vol%, greater than 20 vol%, greater than 22 vol%, or even greater than 24 vol%, based on the volume of the thermally conductive pressure sensitive adhesive composition.

Item 3 is a thermally conductive pressure sensitive adhesive composition according to any of item 1 or 2, wherein the envelope density of the first type of agglomerates, and optionally, the second type of agglomerates and the third type of agglomerates, are not greater than 2.2, not greater than 2.0 g/cm³, not greater than 1.8 g/cm³, or even not greater than 1.6 g/cm³, when measured according to the test method described in the experimental section.

Item 4 is a thermally conductive pressure sensitive adhesive composition according to any of the preceding items, wherein the envelope density of the first type of agglomerates, and optionally, the second type of agglomerates and the third type of agglomerates, are independently comprised between 0.3 and 2.0 g/cm³, between 0.3 and 1.7 g/cm³, or even between 0.4 and 1.5 g/cm³, when measured according to the test method described in the experimental section.

Item 5 is a thermally conductive pressure sensitive adhesive composition according to any of the preceding items, wherein the envelope density of the first type of agglomerates is comprised between 0.5 and 2.2 g/cm³, between 0.8 and 2.2 g/cm³, between 1.0 and 2.0 g/cm³, between 1.4 and 2.0 g/cm³, between 1.6 and 2.0 g/cm³, between 0.3 and 1.7 g/cm³, between 0.4 and 1.5 g/cm³, between 0.5 and 1.5 g/cm³, between 0.5 and 1.2 g/cm³, or even between 0.5 and 1.0 g/cm³, when measured according to the test method described in the experimental section.

Item 6 is a thermally conductive pressure sensitive adhesive composition according to any of the preceding items, wherein the envelope density of the second type of agglomerates is comprised between 0.3 and 2.2 g/cm³, between 0.5 and 2.2 g/cm³, between 0.8 and 2.2 g/cm³, between 1.0 and 2.0 g/cm³, between 1.4 and 2.0 g/cm³, between 1.6 and 2.0 g/cm³, between 0.3 and 1.7 g/cm³, between 0.4 and 1.5 g/cm³, between 0.5 and 1.5 g/cm³, between 0.5 and 1.2 g/cm³, or even between 0.5 and 1.0 g/cm³, when measured according to the test method described in the experimental section.

Item 7 is a thermally conductive pressure sensitive adhesive composition according to any of the preceding items, wherein the envelope density of the third type of agglomerates is comprised between 0.3 and 2.2 g/cm³, between 0.5 and 2.2 g/cm³, between 0.8 and 2.2 g/cm³, between 1.0 and 2.0 g/cm³, between 1.4 and 2.0 g/cm³, between 1.6 and 2.0 g/cm³, between 0.3 and 1.7 g/cm³, between 0.4 and 1.5 g/cm³, between 0.5 and 1.5 g/cm³, between 0.5 and 1.2 g/cm³, or even between 0.5 and 1.0 g/cm³, when measured according to the test method described in the experimental section.

Item 8 is a thermally conductive pressure sensitive adhesive composition according to any of the preceding items, which comprises a boron nitride mixture composition comprising:
i. a first type of hexagonal boron nitride primary particle agglomerates having a first average agglomerate size d₅₀ comprised between 100 and 420 µm, between 110 and 400 µm, between 310 and 410 µm, between 200 and 290 µm, or even between 100 and 170 µm, in combination with either:
   1. hexagonal boron nitride primary particles having a primary particle size dso comprised between 3 and 25 µm, between 5 and 25 µm, between 10 and 20 µm, between 10 and 18 µm, between 12 and 18 µm, or even between 13 and 16 µm; or
   2. a second type of hexagonal boron nitride primary particle agglomerates having a second average agglomerate size d₅₀ which is lower than the first average agglomerate size d₅₀; and
ii. optionally, a third type of hexagonal boron nitride primary particle agglomerates having a third average agglomerate size d₅₀, wherein the third average agglomerate size dso is lower than the first average agglomerate size d₅₀ and is different from second average agglomerate size d₅₀.

Item 9 is a thermally conductive pressure sensitive adhesive composition according to any of the preceding items, which comprises a boron nitride mixture composition comprising:
i. a first type of hexagonal boron nitride primary particle agglomerates having a first average agglomerate size d₅₀ comprised between 100 and 420 µm, between 110 and 400 µm, between 310 and 410 µm, between 200 and 290 µm, or even between 100 and 170 µm; and
ii. hexagonal boron nitride primary particles having a primary particle size dso comprised between 3 and 25 µm, between 5 and 25 µm, between 10 and 20 µm, between 10 and 18 µm, between 12 and 18 µm, or even between 13 and 16 µm.

Item 10 is a thermally conductive pressure sensitive adhesive composition according to any of items 1 to 8, which comprises a boron nitride mixture composition comprising:
i. a first type of hexagonal boron nitride primary particle agglomerates having a first average agglomerate size d₅₀ comprised between 100 and 420 µm, between 110 and 400 µm, between 310 and 410 µm, between 200 and 290 µm, or even between 100 and 170 µm;
ii. a second type of hexagonal boron nitride primary particle agglomerates having a second average agglomerate size d₅₀ which is lower than the first average agglomerate size d₅₀; and
iii. a third type of hexagonal boron nitride primary particle agglomerates having a third average agglomerate size d₅₀.

Item 11 is a thermally conductive pressure sensitive adhesive composition according to item 10, which comprises a boron nitride mixture composition comprising:
i. a first type of hexagonal boron nitride primary particle agglomerates having a first average agglomerate size d₅₀ comprised between 100 and 420 µm, between 110 and 400 µm, between 310 and 410 µm, between 200 and 290 µm, or even between 100 and 170 µm;
ii. a second type of hexagonal boron nitride primary particle agglomerates having a second average agglomerate size d₅₀ which is lower than the first average agglomerate size d₅₀, and which is comprised between 50 and 95 µm, between 55 and 95 µm, between 60 and 90 µm, or even between 65 and 85 µm; and
iii. a third type of hexagonal boron nitride primary particle agglomerates having a third average agglomerate size d₅₀ which is lower than the first average agglomerate size d₅₀ and different from second average agglomerate size d₅₀, and wherein the third average agglomerate size d₅₀ is comprised between 15 and 45 µm, between 20 and 45 µm, between 25 and 45 µm, between 15 and 35 µm, between 20 and 35 µm, or even between 20 and 30 µm.

Item 12 is a thermally conductive pressure sensitive adhesive composition according to any of the preceding items, wherein the first average agglomerate size d₅₀ is comprised between 100 and 350 µm, between 100 and 300 µm, between 100 and 250 µm, between 100 and 200 µm, between 100 and 180 µm, between 100 and 170 µm, between 110 and 160 µm, between 110 and 150 µm, or even between 120 and 150 µm.

Item 13 is a thermally conductive pressure sensitive adhesive composition according to any of the preceding items, wherein the second average agglomerate size d₅₀ is comprised between 50 and 95 µm, between 55 and 95 µm, between 60 and 90 µm, or even between 65 and 85 µm.

Item 14 is a thermally conductive pressure sensitive adhesive composition according to any of the preceding items, wherein the third average agglomerate size d₅₀ is comprised between 10 and 40 µm, between 15 and 40 µm, between 15 and 35 µm, between 20 and 35 µm, or even between 20 and 30 µm.

Item 15 is a thermally conductive pressure sensitive adhesive composition according to any of the preceding items, wherein the first type of agglomerates, and optionally, the second type of agglomerates and the third type of agglomerates, are isotropic agglomerates.

Item 16 is a thermally conductive pressure sensitive adhesive composition according to any of the preceding items, wherein the first type of agglomerates, and optionally, the second type of agglomerates and the third type of agglomerates, are anisotropic agglomerates.

Item 17 is a thermally conductive pressure sensitive adhesive composition according to any of the preceding items, wherein the first type of agglomerates, and optionally, the second type of agglomerates and/or the third type of agglomerates and/or the hexagonal boron nitride primary particles having an average primary particle size d₅₀ comprised between 3 and 25µm, are not obtained from the same source of boron nitride particles, in particular by in-situ pulverization of the same source of boron nitride particles.

Item 18 is a thermally conductive pressure sensitive adhesive composition according to any of the preceding items, wherein the first type of agglomerates, and optionally, the second type of agglomerates and the third type of agglomerates, are obtained by heat treatment.

Item 19 is a thermally conductive pressure sensitive adhesive composition according to any of the preceding items, which comprises a boron nitride mixture composition in an amount no greater than 45 vol%, no greater than 40 vol%, no greater than 35 vol%, or even no greater than 30 vol%, based on the volume of thermally conductive pressure sensitive adhesive composition.

Item 20 is a thermally conductive pressure sensitive adhesive composition according to any of the preceding items, which comprises a boron nitride mixture composition in an amount comprised between 15 and 50 vol%, between 16 and 40 vol%, between 18 and 35 vol%, between 18 and 30 vol%, between 20 and 35 vol%, between 20 and 30 vol%, between 22 and 28 vol%, or even between 22 and 26 vol%, based on the volume of thermally conductive pressure sensitive adhesive composition.

Item 21 is a thermally conductive pressure sensitive adhesive composition according to any of the preceding items, which comprises the first type of agglomerates in an amount greater than 4 vol%, greater than 5 vol%, greater than 10 vol%, or even greater than 15 vol%, based on the volume of the thermally conductive pressure sensitive adhesive composition.

Item 22 is a thermally conductive pressure sensitive adhesive composition according to any of the preceding items, which comprises the first type of agglomerates in an amount greater than 10 wt%, greater than 15 wt%, greater than 20 wt%, greater than 25 wt%, greater than 30 wt%, greater than 50 wt%, or even greater than 70 wt%, based on the weight of the boron nitride mixture composition.

Item 23 is a thermally conductive pressure sensitive adhesive composition according to any of the preceding items, which comprises the first type of agglomerates in an amount comprised between 10 and 90 wt%, between 10 and 70 wt%, between 10 and 50 wt%, between 10 and 40 wt%, between 10 and 35 wt%, between 10 and 30 wt%, or even between 15 and 30 wt%, based on the weight of the boron nitride mixture composition.

Item 24 is a thermally conductive pressure sensitive adhesive composition according to any of the preceding items, wherein the first type of agglomerates, and optionally, the second type of agglomerates, the third type of agglomerates and the hexagonal boron nitride primary particles, are, at least partially, in direct physical contact to each other within the thermally conductive pressure sensitive adhesive composition.

Item 25 is a thermally conductive pressure sensitive adhesive composition according to any of the preceding items, in the form of a layer having a thickness greater than 400 µm, greater than 500 µm, greater than 800 µm, greater than 1000 µm, greater than 1200 µm, greater than 1500 µm, or even greater than 1800 µm.

Item 26 is a thermally conductive pressure sensitive adhesive composition according to any of the preceding items, in the form of a layer having a thickness comprised between 400 and 2000 µm, between 500 and 1800 µm, between 600 and 1500 µm, or even between 800 and 1200 µm.

Item 27 is a thermally conductive pressure sensitive adhesive composition according to any of the preceding items, which has a through-plane thermal conductivity of at least 0.5 W/mK, at least 0.8 W/mK, at least 1.0 W/mK, at least 1.2 W/mK, at least 1.4 W/mK, or even at least 1.5 W/mK, when measured according to the test method described in the experimental section.

Item 28 is a thermally conductive pressure sensitive adhesive composition according to any of the preceding items, which has a through-plane thermal conductivity comprised between 0.5 and 2.0 W/mK, between 0.8 and 1.8 W/mK, between 1.0 and 1.6 W/mK, or even between 1.2 and 1.6 W/mK, when measured according to the test method described in the experimental section.

Item 29 is a thermally conductive pressure sensitive adhesive composition according to any of the preceding items, which has a 90° peel strength value of at least 5 N/cm, at least 8 N/cm, at least 10 N/cm, at least 12 N/cm, at least 15 N/cm, at least 18 N/cm, or even at least 20 N/cm, when measured according to the test method described in the experimental section.

Item 30 is a thermally conductive pressure sensitive adhesive composition according to any of the preceding items, which has a 90° peel strength value of comprised between 5 and 30N/cm, between 5 and 25N/cm, between 10 and 25N/cm, or even between 15 and 25N/cm, when measured according to the test method described in the experimental section.

Item 31 is a precursor of a thermally conductive pressure sensitive adhesive comprising:
a) a (co)polymerizable material comprising a (meth)acrylate ester monomer; and optionally, a co-monomer having an ethylenically unsaturated group; and
b) a boron nitride mixture composition comprising:
   i. a first type of hexagonal boron nitride primary particle agglomerates having a first average agglomerate size d₅₀ comprised between 100 and 420 µm;
   ii. optionally, hexagonal boron nitride primary particles having an average primary particle size d₅₀ comprised between 3 and 25 µm;
   iii. optionally, a second type of hexagonal boron nitride primary particle agglomerates having a second average agglomerate size d₅₀ which is lower than the first average agglomerate size d₅₀;
   iv. optionally, a third type of hexagonal boron nitride primary particle agglomerates having a third average agglomerate size d₅₀, wherein the third average agglomerate size d₅₀ is lower than the first average agglomerate size d₅₀ and is different from second average agglomerate size d₅₀; and
   wherein the hexagonal boron nitride primary particles have a platelet shape; wherein the envelope density of the first type of agglomerates, and optionally, the second type of agglomerates and the third type of agglomerates, are comprised between 0.3 and 2.2 g/cm³, when measured according to the test method described in the experimental section; and wherein the content of the boron nitride mixture composition is greater than 15 vol%, based on the volume of the thermally conductive pressure sensitive adhesive composition.

Item 32 is a method of manufacturing a thermally conductive pressure sensitive adhesive, which comprises the steps of:
a) providing a (co)polymerizable material comprising a (meth)acrylate ester monomer; and optionally, a co-monomer having an ethylenically unsaturated group;
b) polymerizing the (co)polymerizable material comprising a (meth)acrylate ester monomer, thereby forming a (co)polymerized material having a coatable viscosity;
c) providing a boron nitride mixture composition comprising:
   i. a first type of hexagonal boron nitride primary particle agglomerates having a first average agglomerate size d₅₀ comprised between 100 and 420 µm;
   ii. optionally, hexagonal boron nitride primary particles having an average primary particle size d₅₀ comprised between 3 and 25 µm;
   iii. optionally, a second type of hexagonal boron nitride primary particle agglomerates having a second average agglomerate size d₅₀ which is lower than the first average agglomerate size d₅₀;
   iv. optionally, a third type of hexagonal boron nitride primary particle agglomerates having a third average agglomerate size d₅₀, wherein the third average agglomerate size d₅₀ is lower than the first average agglomerate size d₅₀ and is different from second average agglomerate size d₅₀; and
   wherein the hexagonal boron nitride primary particles have a platelet shape; wherein the envelope density of the first type of agglomerates, and optionally, the second type of agglomerates and the third type of agglomerates, are comprised between 0.3 and 2.2 g/cm³, when measured according to the test method described in the experimental section; and wherein the content of the boron nitride mixture composition is greater than 15 vol%, based on the volume of the thermally conductive pressure sensitive adhesive composition;
d) blending the boron nitride mixture composition and the (co)polymerized material, thereby forming a homogeneous coatable composition;
e) coating the coatable composition onto a substrate thereby forming a layer of a thermally conductive pressure sensitive adhesive; and
f) optionally, curing the layer of the thermally conductive pressure sensitive adhesive.

Item 33 is a method according to item 32, wherein the first type of agglomerates, and optionally, the second type of agglomerates and/or the third type of agglomerates and/or the hexagonal boron nitride primary particles having an average primary particle size d₅₀ comprised between 3 and 25 µm, are not obtained from the same source of boron nitride particles, in particular by in-situ pulverization of the same source of boron nitride particles.

Item 34 is a method according to any of item 32 or 33, wherein the (meth)acrylate ester monomer is selected from the group consisting of iso-octyl (meth)acrylate, 2-ethylhexyl (meth)acrylate, 2-propylheptyl (meth)acrylate, 2-octyl (meth)acrylate, butyl acrylate, and any combinations or mixtures thereof; more preferably from the group consisting of iso-octyl acrylate, 2-ethylhexyl acrylate, 2-octyl acrylate, and 2-propylheptyl acrylate.

Item 35 is a method according to any of items 32 to 34, wherein the co-monomer having an ethylenically unsaturated group is a polar comonomer, preferably a polar acrylate, more preferably selected from the group consisting of acrylic acid, methacrylic acid, itaconic acid, hydroxyalkyl acrylates, acrylamides and substituted acrylamides, acrylamines and substituted acrylamines and any combinations or mixtures thereof; more preferably from the group consisting of acrylic acid, methacrylic acid, itaconic acid and hydroxyalkyl acrylates.

Item 36 is the use of a thermally conductive pressure sensitive adhesive composition according to any of items 1 to 30 for industrial applications, in particular for thermal management applications.

Item 37 is the use of a thermally conductive pressure sensitive adhesive composition according to any of items 1 to 30 for battery pack bonding, in particular as a thermally conductive member for bonding battery cells, in particular for bonding pack of cells in a battery pack device.

### EXAMPLES

The present disclosure is further illustrated by the following examples. These examples are merely for illustrative purposes only and are not meant to be limiting on the scope of the appended claims.

### Test methods and procedures:

### Envelope density of hexagonal boron nitride primary particle agglomerates

The envelope density measurements of hexagonal boron nitride primary particle agglomerates are made by means of Mercury Intrusion Porosimetry using Porosimeter AutoPore® IV 9500 (available from Micromeritics Instrument Corporation, USA). The density measurements are reported at a mercury infiltration pressure of 28kPA (4.00 psia).

### Through-plane thermal conductivity (λ)

The through-plane thermal conductivity (λ) of thermally conductive pressure sensitive adhesive samples is calculated according to equation: λ = a • ρ • cP, whereby thermal conductivity (λ) is expressed in (W/m·K), thermal diffusivity (a) is expressed in (mm²/s), specific heat (cP) is expressed in (J/g/K) and density (ρ) is expressed in (g/cm³). The values of parameters (a) and (cP) are simultaneously determined using Flash Apparatus Nanoflash LFA 447 (Netzsch, Selb Germany) according to Test Method ASTM E 1461/DIN EN 821 using the flash method at room temperature. The test samples having the following dimension 10 mm (length) x 10 mm (width) x 2 mm (thickness) are prepared by lamination of two identical samples having the following dimension 10 mm (length) x 10 mm (width) x 1 mm (thickness).

### 90°-Peel-test at 300 mm/min (according to Test Method AFERA 5001)

Thermally conductive pressure sensitive adhesive strips according to the present disclosure and having a width of 13 mm and a length > 175 mm are cut out in the machine direction from the sample material.

For test sample preparation the liner is first removed from the one adhesive side and placed on an aluminum strip having the following dimension 22 x 1.6 cm. Then, the adhesive coated side of each PSA strip is placed, after the liner is removed, with its adhesive side down on a clean test panel using light finger pressure. Next, the test samples are rolled twice in each direction with a standard FINAT test roller (weight 6.8 kg) at a speed of approximately 10 mm per second to obtain intimate contact between the adhesive mass and the surface. After applying the pressure sensitive adhesive strips to the test panel, the test samples are allowed to dwell 20 minutes or 72 hours at ambient room temperature (23°C +/- 2°C, 50% relative humidity +/-5%) prior to testing.

For peel testing the test samples are in a first step clamped in the lower movable jaw of a Zwick tensile tester (Model Z020 commercially available from Zwick/Roell GmbH, Ulm, Germany). The thermally conductive pressure sensitive adhesive strips are folded back at an angle of 90° and their free ends grasped in the upper jaw of the tensile tester in a configuration commonly utilized for 90° peel measurements. The tensile tester is set at 300 mm per minute jaw separation rate. Test results are expressed in Newton per 10 mm (N/10 mm). The quoted peel values are the average of two 90°-peel measurements.

### Static shear test at room temperature with 500 g hanging weights (according to Test Method AFERA 5012)

The static shear is a measure of the cohesiveness or internal strength of an adhesive. It is measured in units of time (minutes) required to pull a standard area of adhesive sheet material from a stainless steel test panel under stress of a constant, standard load.

A thermally conductive pressure sensitive adhesive film stripe of 13 mm width and 25 mm length is cut out in machine direction from the sample and the specimen placed on a clean steel test panel. The opposing side of the test sample is then placed on an aluminium plate having a hole for fixing the weight using light finger pressure. The standard FINAT test roller (weight 6.8 kg) is rolled twice in each direction at a speed of approximately 10 mm per second to obtain intimate contact between the pressure sensitive adhesive mass and the substrate surface (test plate). After applying the pressure sensitive adhesive film stripe (specimen) to the test plate, the test plate is allowed a dwell time at room temperature (23°C +/-2°C, 50% relative humidity +/-5%) for a period of 72 h before testing.

The test panel is placed in a shear holding device. After a 10 minute dwell time at room temperature, the 500 g load is hung into the hole of the aluminum test panels. The timer is started. The results are recorded in minutes until failure and are the average of two shear measurements. A recorded time of "10000+" indicates that the tape does not fail after 10000 min, when the test is stopped.

### Test vanels/substrates used for testing:

a) Stainless steel test panels according to EN1939:20, surface 1.4301 mirror-like (commercially available from Rocholl GmbH) having a dimension of 150 mm x 50 mm x 2 mm are the selected panels for all 90° peel tests.
   Prior to testing the stainless steel panels are cleaned according to the following described procedure. First, the stainless steel panels are wiped once with MEK, then with heptane followed by a last wipe with MEK and thereafter dried with a paper tissue.
b) Aluminum test panels in accordance with ASTM B211 having a dimension of 50 mm x 25 mm x 1 mm. Prior to the preparation of a test assembly, the aluminium panels are roughened using ScotchBrite 4774 (commercially available by 3M) and afterwards wiped once with isopropyl alcohol. Drying is done using a paper tissue.

### Materials employed:

In the examples, the following raw materials are used:
**2-Ethyl hexyl acrylate** (C8-acrylate, 2-EHA): is an ester of 2-ethylalcohol and acrylic acid which is obtained from BASF SE, Germany.
**Isooctylacrylate** (C8-acrylate, IOA) is an ester of isooctylalcohol and acrylic acid which is obtained from 3M Hilden, Germany (IOA).
**Acrylic acid** (AA) is obtained from Arkema, Italy.
**1,6-Hexanedioldiacrylate** (HDDA) is a fast curing diacrylate obtained from BASF SE, Germany.
**Omnirad BDK** 2,2-dimethoxy-2-phenylacetophenone is a UV-initiator for radical polymerization, commercially available from iGm resins, Waalwijk Netherlands.
**Aerosil R-972** are hydrophobic fumed silica particles, available from Evonik, Germany.
**3M Boron Nitride Cooling Filler Platelets 015** - hexagonal boron nitride particles having an average primary particle size d₅₀ comprised between 13 and 16 µm, commercially available from the 3M Company.
**3M Boron Nitride Cooling Filler Agglomerates 50** - hexagonal boron nitride particle agglomerates having an average primary particle size d₅₀ comprised between 20 and 30 µm, commercially available from the 3M Company.
**3M Boron Nitride Cooling Filler Agglomerates 100** - hexagonal boron nitride particle agglomerates having an average primary particle size d₅₀ comprised between 65 and 85 µm, commercially available from the 3M Company.
**3M Boron Nitride Cooling Filler Agglomerates 200** - hexagonal boron nitride particle agglomerates having an average primary particle size d₅₀ comprised between 120 and 150 µm, commercially available from the 3M Company.
**3M Boron Nitride Cooling Filler Agglomerates 100-200** - 50wt%/50wt% blend of 3M Boron Nitride Cooling Filler Agglomerates 100 and 200, as described above - hexagonal boron nitride particle agglomerates having an average primary particle size d₅₀ comprised between 65 and 150 µm.
**Tape 3M 8940** is a thin thermally conductive adhesive tape having a tape thickness of 190 µm, commercially available from 3M Germany.
**3M VHB™ Tape 4611** is a thick dark acrylic foam tape having a tape thickness of 1100 µm, commercially available from 3M Germany.

### Preparation of the curable precursor of the acrylic polymer components:

### Preparation of the curable precursor of acrylic polymer component 1:

The liquid precursor of acrylic polymer component 1, later referred to as APC1, is prepared by combining the 90wt% of IOA and 10 wt% of acrylic acid with 0.04 pph of Omnirad as a photoinitiator in a glass vessel. Before the UV exposure is initiated the mixture is flushed 10 minutes with nitrogen and nitrogen is also bubbled into the mixture the whole time until the polymerization process is stopped by adding air to the syrup. All the time the mixture is stirred with a propeller stirrer (300 U/min) and the reaction is stopped when a viscosity of about 500 mPas is reached (when measured with a Brookfield viscosimeter, T = 25 °C, spindle 4, 12 rpm). Additional 0.16 ppH Omnirad BDK and 0.12 ppH HDDA crosslinker, are added to the syrup and mixed until they have dissolved / dispersed.

### Preparation of the curable precursor of acrylic polymer component 2:

The liquid precursor of acrylic polymer component 1, later referred to as APC2, is prepared by combining the 90wt% of 2-EHA and 10 wt% of acrylic acid with 0.04 pph of Omnirad as a photoinitiator in a glass vessel. Before the UV exposure is initiated the mixture is flushed 10 minutes with nitrogen and nitrogen is also bubbled into the mixture the whole time until the polymerization process is stopped by adding air to the syrup. All the time the mixture is stirred with a propeller stirrer (300 U/min) and the reaction is stopped when a viscosity of about 500 mPas is reached (when measured with a Brookfield viscosimeter, T = 25 °C, spindle 4, 12 rpm). Additional 0.16 ppH Omnirad BDK, 0.12 ppH HDDA crosslinker, and 3 pph Aerosil 972, are added to the syrup and mixed until they have dissolved / dispersed.

### Preparation of the thermally conductive pressure sensitive adhesive compositions:

The selected amount of boron nitride mixture is incorporated into the corresponding liquid precursor of acrylic polymer component and the compound is homogenized by putting the material on a rotary mixer for about 14 hours at room temperature. Before processing, the materials are degassed under vacuum for 15 minutes using a dessicator and then gently stirred again with wooden spoon to regain homogeneous mixtures.

The exact formulations of the curable precursors of the thermally conductive pressure sensitive adhesive compositions are listed in Table 1 below.

The curable precursors are knife-coated and the resulting adhesive layer thickness is set to about 1000 µm using the installed regulation caliper. Curing is effected in a two stage UV-curing station both from the top, i.e. in a direction towards the exposed curable precursor layer, and bottom side. The radiation is provided by fluorescent lamps at a wavelength between 300 - 400 nm with a maximum at 351 nm. The total radiation intensity irradiated cumulatively from top and bottom is 4.8 mW/cm² by zone.

### Examples:

### Formulations of the curable precursors used for making the thermally conductive pressure sensitive adhesives

The formulations of the curable precursors used for making the thermally conductive pressure sensitive adhesives are listed in Table 1 below. Table 1 contains comparative example 1, later referred to as C1, which is a curable precursor not comprising any hexagonal boron nitride primary particle agglomerates. Table 1 also contains comparative example 2, later referred to as C2, which is a curable precursor comprising a mixture hexagonal boron nitride primary particle agglomerates but without hexagonal boron nitride primary particle agglomerates having a first average agglomerate size dso comprised between 100 and 420 µm. Table 1 also contains comparative example 3, later referred to as C3, which is commercially available thermally conductive adhesive tape 3M 8940.

**Table 1: Exemplary formulations and through-plane thermal conductivity performance.**

| Ingredients (in g) | C1 | Ex.1 | Ex.2 | Ex.3 | Ex.4 |
|---|---|---|---|---|---|
| APC1 | 250 | 250 | - | - | - |
| APC2 | - | - | 176 | 176 | 176 |
| CFP 015 | 138 | - | - | 25 | 25 |
| CFA 100-200 | - | 138 | 100 | 100 | - |
| CFA 200 | - | - | - | - | 100 |
| CFA 100 | - | - | - | - | - |
| CFA 50 | - | - | - | - | - |
| Aerosil R-972 | - | - | 5 | 5 | 5 |
| Vol% BN Fillers | 20 | 20 | 20 | 24 | 24 |
| | | | | | |
| Through-plane thermal conductivity (in W/m/K) | 0.63 | 1.21 | 1.26 | 1.59 | 1.34 |
| | | | | | |

| Ingredients (in g) | C2 | Ex.5 | Ex.6 | Ex.7 | C3-3M 8940 |
|---|---|---|---|---|---|
| APC1 | - | - | - | - | - |
| APC2 | 176 | 176 | 176 | 176 | - |
| CFP 015 | 25 | - | - | 20 | - |
| CFA 100-200 | - | - | - | - | - |
| CFA 200 | - | 40 | 30 | 20 | - |
| CFA 100 | 50 | 40 | 30 | 20 | - |
| CFA 50 | 50 | 60 | 80 | 80 | - |
| Aerosil R-972 | 5 | 5 | 5 | 5 | - |
| Vol% BN Fillers | 24 | 26 | 26 | 26 | - |
| | | | | | |
| Through-plane thermal conductivity (in W/m/K) | 0.98 | 1.34 | 1.54 | 1.44 | 0.46 |

### Adhesion performance

The 90° Peel test results at various dwell time as well as the static shear results at room temperature of two exemplary thermally conductive pressure sensitive adhesives of the present disclosure are shown in Table 2 below. Table 1 also shows adhesive properties of comparative example 4, later referred to as C4, which is commercially available all-purpose acrylic foam adhesive tape 3M VHB™ Tape 4611.

| | Ex.3 | Ex.6 | C4 3M 4611 |
|---|---|---|---|
| 90° Peel stainless steel, 20 min (in N/cm) | 9.2 | 10.5 | 23.6 |
| 90° Peel stainless steel, 72 h (in N/cm) | 13.0 | 20.8 | 39.6 |
| Static Shear 500g/ 23°C (in min) | > 10.000 | > 10.000 | > 10.000 |

## Claims

1. A thermally conductive pressure sensitive adhesive composition, comprising:
a) an acrylic polymer component; and
b) a boron nitride mixture composition comprising:
i. a first type of hexagonal boron nitride primary particle agglomerates having a first average agglomerate size d₅₀ comprised between 100 and 420 µm;
ii. optionally, hexagonal boron nitride primary particles having an average primary particle size d₅₀ comprised between 3 and 25µm;
iii. optionally, a second type of hexagonal boron nitride primary particle agglomerates having a second average agglomerate size d₅₀ which is lower than the first average agglomerate size d₅₀;
iv. optionally, a third type of hexagonal boron nitride primary particle agglomerates having a third average agglomerate size d₅₀, wherein the third average agglomerate size d₅₀ is lower than the first average agglomerate size d₅₀ and is different from second average agglomerate size d₅₀; and
wherein the hexagonal boron nitride primary particles have a platelet shape; wherein the envelope density of the first type of agglomerates, and optionally, the second type of agglomerates and the third type of agglomerates, are comprised between 0.3 and 2.2 g/cm³, when measured according to the test method described in the experimental section; and wherein the content of the boron nitride mixture composition is greater than 15 vol%, based on the volume of the thermally conductive pressure sensitive adhesive composition.

2. A thermally conductive pressure sensitive adhesive composition according to claim 1, which comprises a boron nitride mixture composition in an amount greater than 18 vol%, greater than 20 vol%, greater than 22 vol%, or even greater than 24 vol%, based on the volume of the thermally conductive pressure sensitive adhesive composition.

3. A thermally conductive pressure sensitive adhesive composition according to any of the preceding claims, wherein the envelope density of the first type of agglomerates, and optionally, the second type of agglomerates and the third type of agglomerates, are independently comprised between 0.3 and 2.0 g/cm³, between 0.3 and 1.7 g/cm³, or even between 0.4 and 1.5 g/cm³, when measured according to the test method described in the experimental section.

4. A thermally conductive pressure sensitive adhesive composition according to any of the preceding claims, wherein the envelope density of the first type of agglomerates is comprised between 0.5 and 2.2 g/cm³, between 0.8 and 2.2 g/cm³, between 1.0 and 2.0 g/cm³, between 1.4 and 2.0 g/cm³, between 1.6 and 2.0 g/cm³, between 0.3 and 1.7 g/cm³, between 0.4 and 1.5 g/cm³, between 0.5 and 1.5 g/cm³, between 0.5 and 1.2 g/cm³, or even between 0.5 and 1.0 g/cm³, when measured according to the test method described in the experimental section.

5. A thermally conductive pressure sensitive adhesive composition according to any of the preceding claims, which comprises a boron nitride mixture composition comprising:
i. a first type of hexagonal boron nitride primary particle agglomerates having a first average agglomerate size d₅₀ comprised between 100 and 420 µm, between 110 and 400 µm, between 310 and 410 µm, between 200 and 290 µm, or even between 100 and 170 µm, in combination with either:
1. hexagonal boron nitride primary particles having a primary particle size d₅₀ comprised between 3 and 25 µm, between 5 and 25 µm, between 10 and 20 µm, between 10 and 18 µm, between 12 and 18 µm, or even between 13 and 16 µm; or
2. a second type of hexagonal boron nitride primary particle agglomerates having a second average agglomerate size d₅₀ which is lower than the first average agglomerate size d₅₀; and
ii. optionally, a third type of hexagonal boron nitride primary particle agglomerates having a third average agglomerate size d₅₀, wherein the third average agglomerate size d₅₀ is lower than the first average agglomerate size d₅₀ and is different from second average agglomerate size d₅₀.

6. A thermally conductive pressure sensitive adhesive composition according to any of the preceding claims, which comprises a boron nitride mixture composition comprising:
i. a first type of hexagonal boron nitride primary particle agglomerates having a first average agglomerate size d₅₀ comprised between 100 and 420 µm, between 110 and 400 µm, between 310 and 410 µm, between 200 and 290 µm, or even between 100 and 170 µm; and
ii. hexagonal boron nitride primary particles having a primary particle size d₅₀ comprised between 3 and 25 µm, between 5 and 25 µm, between 10 and 20 µm, between 10 and 18 µm, between 12 and 18 µm, or even between 13 and 16 µm.

7. A thermally conductive pressure sensitive adhesive composition according to any of the preceding claims, wherein the first average agglomerate size d₅₀ is comprised between 100 and 350 µm, between 100 and 300 µm, between 100 and 250 µm, between 100 and 200 µm, between 100 and 180 µm, between 100 and 170 µm, between 110 and 160 µm, between 110 and 150 µm, or even between 120 and 150 µm.

8. A thermally conductive pressure sensitive adhesive composition according to any of the preceding claims, wherein the first type of agglomerates, and optionally, the second type of agglomerates and the third type of agglomerates, are isotropic agglomerates.

9. A thermally conductive pressure sensitive adhesive composition according to any of the preceding claims, wherein the first type of agglomerates, and optionally, the second type of agglomerates and/or the third type of agglomerates and/or the hexagonal boron nitride primary particles having an average primary particle size dso comprised between 3 and 25µm, are not obtained from the same source of boron nitride particles, in particular by in-situ pulverization of the same source of boron nitride particles.

10. A thermally conductive pressure sensitive adhesive composition according to any of the preceding claims, which comprises a boron nitride mixture composition in an amount no greater than 45 vol%, no greater than 40 vol%, no greater than 35 vol%, or even no greater than 30 vol%, based on the volume of thermally conductive pressure sensitive adhesive composition.

11. A thermally conductive pressure sensitive adhesive composition according to any of the preceding claims, wherein the first type of agglomerates, and optionally, the second type of agglomerates, the third type of agglomerates and the hexagonal boron nitride primary particles, are, at least partially, in direct physical contact to each other within the thermally conductive pressure sensitive adhesive composition.

12. A thermally conductive pressure sensitive adhesive composition according to any of the preceding claims, in the form of a layer having a thickness greater than 400 µm, greater than 500 µm, greater than 800 µm, greater than 1000 µm, greater than 1200 µm, greater than 1500 µm, or even greater than 1800 µm.

13. A thermally conductive pressure sensitive adhesive composition according to any of the preceding claims, which has a through-plane thermal conductivity of at least 0.5 W/mK, at least 0.8 W/mK, at least 1.0 W/mK, at least 1.2 W/mK, at least 1.4 W/mK, or even at least 1.5 W/mK, when measured according to the test method described in the experimental section.

14. A thermally conductive pressure sensitive adhesive composition according to any of the preceding claims, which has a 90° peel strength value of comprised between 5 and 30N/cm, between 5 and 25N/cm, between 10 and 25N/cm, or even between 15 and 25N/cm, when measured according to the test method described in the experimental section.

15. A method of manufacturing a thermally conductive pressure sensitive adhesive, which comprises the steps of:
a) providing a (co)polymerizable material comprising a (meth)acrylate ester monomer; and optionally, a co-monomer having an ethylenically unsaturated group;
b) polymerizing the (co)polymerizable material comprising a (meth)acrylate ester monomer, thereby forming a (co)polymerized material having a coatable viscosity;
c) providing a boron nitride mixture composition comprising:
i. a first type of hexagonal boron nitride primary particle agglomerates having a first average agglomerate size d₅₀ comprised between 100 and 420 µm;
ii. optionally, hexagonal boron nitride primary particles having an average primary particle size d₅₀ comprised between 3 and 25 µm;
iii. optionally, a second type of hexagonal boron nitride primary particle agglomerates having a second average agglomerate size d₅₀ which is lower than the first average agglomerate size d₅₀;
iv. optionally, a third type of hexagonal boron nitride primary particle agglomerates having a third average agglomerate size d₅₀, wherein the third average agglomerate size d₅₀ is lower than the first average agglomerate size d₅₀ and is different from second average agglomerate size d₅₀; and
wherein the hexagonal boron nitride primary particles have a platelet shape; wherein the envelope density of the first type of agglomerates, and optionally, the second type of agglomerates and the third type of agglomerates, are comprised between 0.3 and 2.2 g/cm³, when measured according to the test method described in the experimental section; and wherein the content of the boron nitride mixture composition is greater than 15 vol%, based on the volume of the thermally conductive pressure sensitive adhesive composition;
d) blending the boron nitride mixture composition and the (co)polymerized material, thereby forming a homogeneous coatable composition;
e) coating the coatable composition onto a substrate thereby forming a layer of a thermally conductive pressure sensitive adhesive; and
f) optionally, curing the layer of the thermally conductive pressure sensitive adhesive.

16. A method according to claim 15, wherein the first type of agglomerates, and optionally, the second type of agglomerates and/or the third type of agglomerates and/or the hexagonal boron nitride primary particles having an average primary particle size d₅₀ comprised between 3 and 25 µm, are not obtained from the same source of boron nitride particles, in particular by in-situ pulverization of the same source of boron nitride particles.

17. Use of a thermally conductive pressure sensitive adhesive composition according to any of claims 1 to 14 for industrial applications, in particular for thermal management applications.

## Patentansprüche

1. Thermisch leitende Haftklebstoffzusammensetzung, die Folgendes umfasst:
a) eine Acrylpolymerkomponente und
b) eine Bornitridgemischzusammensetzung, die Folgendes umfasst:
i. eine erste Art von hexagonalen Bornitrid-Primärteilchen-Agglomeraten mit einer ersten durchschnittlichen Agglomeratgröße d₅₀ zwischen 100 und 420 µm;
ii. wahlweise hexagonale Bornitrid-Primärteilchen mit einer durchschnittlichen Primärteilchengröße d₅₀ zwischen 3 und 25 µm;
iii. wahlweise eine zweite Art von hexagonalen Bornitrid-Primärteilchen-Agglomeraten mit einer zweiten durchschnittlichen Agglomeratgröße d₅₀, die niedriger als die erste durchschnittliche Agglomeratgröße d₅₀ ist;
iv. wahlweise eine dritte Art von hexagonalen Bornitrid-Primärteilchen-Agglomeraten mit einer dritten durchschnittlichen Agglomeratgröße d₅₀, wobei die dritte durchschnittliche Agglomeratgröße d₅₀ geringer ist als die erste durchschnittliche Agglomeratgröße d₅₀ und sich von der zweiten durchschnittlichen Agglomeratgröße d₅₀ unterscheidet; und
wobei die hexagonalen Bornitrid-Primärteilchen eine Plättchenform aufweisen; wobei die Hülldichte der ersten Art von Agglomeraten, und wahlweise der zweiten Art von Agglomeraten und der dritten Art von Agglomeraten, zwischen 0,3 und 2,2 g/cm³ liegt, bei Messung gemäß dem im Experimentierabschnitt beschriebenen Testverfahren; und wobei der Gehalt der Bornitridgemischzusammensetzung größer als 15 Volumen-% basierend auf dem Volumen der thermisch leitenden Haftklebstoffzusammensetzung ist.

2. Thermisch leitende Haftklebstoffzusammensetzung nach Anspruch 1, welche eine Bornitridgemischzusammensetzung in einer Menge von mehr als 18 Volumen-%, mehr als 20 Volumen-%, mehr als 22 Volumen-% oder sogar mehr als 24 Volumen-%, bezogen auf das Volumen der thermisch leitenden Haftklebstoffzusammensetzung, umfasst.

3. Thermisch leitende Haftklebstoffzusammensetzung nach einem der vorstehenden Ansprüche, wobei die Hülldichte der ersten Art von Agglomeraten, und wahlweise der zweiten Art von Agglomeraten und der dritten Art von Agglomeraten, unabhängig voneinander zwischen 0,3 und 2,0 g/cm³, zwischen 0,3 und 1,7 g/cm³ oder sogar zwischen 0,4 und 1,5 g/cm³ bei Messung gemäß dem im Experimentierabschnitt beschriebenen Verfahren liegt.

4. Thermisch leitende Haftklebstoffzusammensetzung nach einem der vorstehenden Ansprüche, wobei die Hülldichte der ersten Art von Agglomeraten zwischen 0,5 und 2,2 g/cm³, zwischen 0,8 und 2,2 g/cm³, zwischen 1,0 und 2,0 g/cm³, zwischen 1,4 und 2,0 g/cm³, zwischen 1,6 und 2,0 g/cm³, zwischen 0,3 und 1,7 g/cm³, zwischen 0,4 und 1,5 g/cm³, zwischen 0,5 und 1,5 g/cm³, zwischen 0,5 und 1,2 g/cm³ oder sogar zwischen 0,5 und 1,0 g/cm³ bei Messung gemäß dem im Experimentierabschnitt beschriebenen Verfahren liegt.

5. Thermisch leitende Haftklebstoffzusammensetzung nach einem der vorstehenden Ansprüche, die eine Bornitridgemischzusammensetzung umfasst, die Folgendes umfasst:
i. eine erste Art von hexagonalen Bornitrid-Primärteilchen-Agglomeraten mit einer ersten durchschnittlichen Agglomeratgröße d₅₀, die zwischen 100 und 420 µm, zwischen 110 und 400 µm, zwischen 310 und 410 µm, zwischen 200 und 290 µm oder sogar zwischen 100 und 170 µm liegt, in Kombination mit entweder:
1. hexagonalen Bornitrid-Primärteilchen mit einer Primärteilchengröße d₅₀, die zwischen 3 und 25 µm, zwischen 5 und 25 µm, zwischen 10 und 20 µm, zwischen 10 und 18 µm, zwischen 12 und 18 µm oder sogar zwischen 13 und 16 µm liegt; oder
2. eine zweite Art von hexagonalen Bornitrid-Primärteilchen-Agglomeraten mit einer zweiten durchschnittlichen Agglomeratgröße d₅₀, die niedriger als die erste durchschnittliche Agglomeratgröße d₅₀ ist; und
ii. wahlweise eine dritte Art von hexagonalen Bornitrid-Primärteilchen-Agglomeraten mit einer dritten durchschnittlichen Agglomeratgröße d₅₀, wobei die dritte durchschnittliche Agglomeratgröße d₅₀ geringer ist als die erste durchschnittliche Agglomeratgröße d₅₀ und sich von der zweiten durchschnittlichen Agglomeratgröße d₅₀ unterscheidet;

6. Thermisch leitende Haftklebstoffzusammensetzung nach einem der vorstehenden Ansprüche, die eine Bornitridgemischzusammensetzung umfasst, die Folgendes umfasst:
i. eine erste Art von hexagonalen Bornitrid-Primärteilchen-Agglomeraten mit einer ersten durchschnittlichen Agglomeratgröße d₅₀, die zwischen 100 und 420 µm, zwischen 110 und 400 µm, zwischen 310 und 410 µm, zwischen 200 und 290 µm oder sogar zwischen 100 und 170 µm liegt; und
ii. hexagonale Bornitrid-Primärteilchen mit einer Primärteilchengröße d₅₀, die zwischen 3 und 25 µm, zwischen 5 und 25 µm, zwischen 10 und 20 µm, zwischen 10 und 18 µm, zwischen 12 und 18 µm oder sogar zwischen 13 und 16 µm liegt.

7. Thermisch leitende Haftklebstoffzusammensetzung nach einem der vorstehenden Ansprüche, wobei die erste durchschnittliche Agglomeratgröße d₅₀ zwischen 100 und 350 µm, zwischen 100 und 300 µm, zwischen 100 und 250 µm, zwischen 100 und 200 µm, zwischen 100 und 180 µm, zwischen 100 und 170 µm, zwischen 110 und 160 µm, zwischen 110 und 150 µm oder sogar zwischen 120 und 150 µm liegt.

8. Thermisch leitende Haftklebstoffzusammensetzung nach einem der vorstehenden Ansprüche, wobei die erste Art von Agglomeraten und wahlweise die zweite Art von Agglomeraten und die dritte Art von Agglomeraten isotrope Agglomerate sind.

9. Thermisch leitende Haftklebstoffzusammensetzung nach einem der vorstehenden Ansprüche, wobei die erste Art von Agglomeraten und wahlweise die zweite Art von Agglomeraten und/oder die dritte Art von Agglomeraten und/oder die hexagonalen Bornitrid-Primärteilchen mit einer durchschnittlichen Primärteilchengröße d₅₀, die zwischen 3 und 25 µm liegt, nicht von derselben Quelle von Bornitridteilchen erhalten werden, genauer durch In-situ-Pulverisierung derselben Quelle von Bornitridteilchen.

10. Thermisch leitende Haftklebstoffzusammensetzung nach einem der vorstehenden Ansprüche, die eine Bornitridgemischzusammensetzung in einer Menge von nicht mehr als 45 Volumen-%, nicht mehr als 40 Volumen-%, nicht mehr als 35 Volumen-% oder sogar nicht mehr als 30 Volumen-%, bezogen auf das Volumen der thermisch leitenden Haftklebstoffzusammensetzung, umfasst.

11. Thermisch leitende Haftklebstoffzusammensetzung nach einem der vorstehenden Ansprüche, wobei die erste Art von Agglomeraten und wahlweise die zweite Art von Agglomeraten, die dritte Art von Agglomeraten und die hexagonalen Bornitrid-Primärteilchen, zumindest teilweise in direktem physischen Kontakt miteinander innerhalb der thermisch leitenden Haftklebstoffzusammensetzung stehen.

12. Thermisch leitende Haftklebstoffzusammensetzung nach einem der vorstehenden Ansprüche in Form einer Schicht mit einer Dicke von mehr als 400 µm, mehr als 500 µm, mehr als 800 µm, mehr als 1000 µm, mehr als 1200 µm, mehr als 1500 µm oder sogar mehr als 1800 µm.

13. Thermisch leitende Haftklebstoffzusammensetzung nach einem der vorstehenden Ansprüche, die eine Wärmeleitfähigkeit durch die Ebene von mindestens 0,5 W/mK, mindestens 0,8 W/mK, mindestens 1,0 W/mK, mindestens 1,2 W/mK, mindestens 1,4 W/mK oder sogar mindestens 1,5 W/mK bei Messung gemäß dem im Experimentierabschnitt beschriebenen Testverfahren aufweist.

14. Thermisch leitende Haftklebstoffzusammensetzung nach einem der vorstehenden Ansprüche, die einen 90°-Ablösefestigkeitswert von zwischen 5 und 30 N/cm, zwischen 5 und 25 N/cm, zwischen 10 und 25 N/cm oder sogar zwischen 15 und 25 N/cm bei Messung gemäß dem im Experimentierabschnitt beschriebenen Testverfahren aufweist.

15. Verfahren zum Herstellen eines thermisch leitenden Haftklebstoffs, das die folgenden Schritte umfasst:
a) das Bereitstellen eines (co-)polymerisierbaren Materials, umfassend ein (Meth)Acrylatestermonomer; und wahlweise ein Comonomer mit einer ethylenisch ungesättigten Gruppe;
b) das Polymerisieren des (co-)polymerisierbaren Materials, das ein (Meth)Acrylatestermonomer umfasst, wodurch ein (co-)polymerisiertes Material mit einer beschichtbaren Viskosität gebildet wird;
c) das Bereitstellen einer Bornitridgemischzusammensetzung, umfassend:
i. eine erste Art von hexagonalen Bornitrid-Primärteilchen-Agglomeraten mit einer ersten durchschnittlichen Agglomeratgröße d₅₀ zwischen 100 und 420 µm;
ii. wahlweise hexagonale Bornitrid-Primärteilchen mit einer durchschnittlichen Primärteilchengröße d₅₀ zwischen 3 und 25 µm;
iii. wahlweise eine zweite Art von hexagonalen Bornitrid-Primärteilchen-Agglomeraten mit einer zweiten durchschnittlichen Agglomeratgröße d₅₀, die niedriger als die erste durchschnittliche Agglomeratgröße d₅₀ ist;
iv. wahlweise eine dritte Art von hexagonalen Bornitrid-Primärteilchen-Agglomeraten mit einer dritten durchschnittlichen Agglomeratgröße d₅₀, wobei die dritte durchschnittliche Agglomeratgröße d₅₀ geringer ist als die erste durchschnittliche Agglomeratgröße d₅₀ und sich von der zweiten durchschnittlichen Agglomeratgröße d₅₀ unterscheidet; und
wobei die hexagonalen Bornitrid-Primärteilchen eine Plättchenform aufweisen; wobei die Hülldichte der ersten Art von Agglomeraten, und wahlweise der zweiten Art von Agglomeraten und der dritten Art von Agglomeraten, zwischen 0,3 und 2,2 g/cm³ liegt, bei Messung gemäß dem im Experimentierabschnitt beschriebenen Testverfahren; und wobei der Gehalt der Bornitridgemischzusammensetzung größer ist als 15 Volumen-%, basierend auf dem Volumen der thermisch leitenden Haftklebstoffzusammensetzung;
d) das Mischen der Bornitridgemischzusammensetzung und des (co-) polymerisierten Materials, wodurch eine homogene beschichtungsfähige Zusammensetzung gebildet wird;
e) das Beschichten der beschichtungsfähigen Zusammensetzung auf ein Substrat, wodurch eine Schicht aus einem thermisch leitenden Haftklebstoff gebildet wird; und
f) wahlweise das Aushärten der Schicht des thermisch leitenden Haftklebstoffs.

16. Verfahren nach Anspruch 15, wobei die erste Art von Agglomeraten und wahlweise die zweite Art von Agglomeraten und/oder die dritte Art von Agglomeraten und/oder die hexagonalen Bornitrid-Primärteilchen mit einer durchschnittlichen Primärteilchengröße d₅₀, die zwischen 3 und 25 µm liegt, nicht aus derselben Quelle von Bornitridteilchen erhalten werden, genauer durch Insitu-Pulverisierung derselben Quelle von Bornitridteilchen.

17. Verwendung einer thermisch leitenden Haftklebstoffzusammensetzung nach einem der Ansprüche 1 bis 14 für industrielle Anwendungen, genauer für Wärmemanagementanwendungen.

## Revendications

1. Composition d'adhésif sensible à la pression thermoconducteur, comprenant :
a) un composant polymère acrylique ; et
b) une composition de mélange de nitrure de bore comprenant :
i. un premier type d'agglomérats de particules primaires de nitrure de bore hexagonal ayant une première taille moyenne d'agglomérat d₅₀ comprise entre 100 et 420 µm ;
ii. éventuellement, des particules primaires de nitrure de bore hexagonal ayant une taille moyenne de particules primaires d₅₀ comprise entre 3 et 25 µm ;
iii. éventuellement, un deuxième type d'agglomérats de particules primaires de nitrure de bore hexagonal ayant une deuxième taille moyenne d'agglomérat d₅₀ qui est inférieure à la première taille moyenne d'agglomérat d₅₀ ;
iv. éventuellement, un troisième type d'agglomérats de particules primaires de nitrure de bore hexagonal ayant une troisième taille moyenne d'agglomérat d₅₀, dans laquelle la troisième taille moyenne d'agglomérat d₅₀ est inférieure à la première taille moyenne d'agglomérat d₅₀ et est différente de la deuxième taille moyenne d'agglomérat d₅₀ ; et
dans laquelle les particules primaires de nitrure de bore hexagonal ont une forme de plaquette ;
dans laquelle les masses volumiques d'enveloppe du premier type d'agglomérats, et éventuellement, du deuxième type d'agglomérats et du troisième type d'agglomérats, sont comprises entre 0,3 et 2,2 g/cm³, lorsqu'on mesure selon le procédé de test décrit dans la section expérimentale ; et
dans laquelle la teneur de la composition de mélange de nitrure de bore est supérieure à 15 % en volume sur la base du volume de la composition d'adhésif sensible à la pression thermoconducteur.

2. Composition d'adhésif sensible à la pression thermoconducteur selon la revendication 1, qui comprend une composition de mélange de nitrure de bore en une quantité supérieure à 18 % en volume, supérieure à 20 % en volume, supérieure à 22 % en volume, ou même supérieure à 24 % en volume, sur la base du volume de la composition d'adhésif sensible à la pression thermoconducteur.

3. Composition d'adhésif sensible à la pression thermoconducteur selon l'une quelconque des revendications précédentes, dans laquelle les masses volumiques d'enveloppe du premier type d'agglomérats, et éventuellement, du deuxième type d'agglomérats et du troisième type d'agglomérats, sont indépendamment comprise entre 0,3 et 2,0 g/cm³, entre 0,3 et 1,7 g/cm³, ou même entre 0,4 et 1,5 g/cm³, lorsqu'on mesure selon le procédé de test décrit dans la section expérimentale.

4. Composition d'adhésif sensible à la pression thermoconducteur selon l'une quelconque des revendications précédentes, dans laquelle la masse volumique d'enveloppe du premier type d'agglomérats est comprise entre 0,5 et 2,2 g/cm³, entre 0,8 et 2,2 g/cm³, entre 1,0 et 2,0 g/cm³, entre 1,4 et 2,0 g/cm³, entre 1,6 et 2,0 g/cm³, entre 0,3 et 1,7 g/cm³, entre 0,4 et 1,5 g/cm³, entre 0,5 et 1,5 g/cm³, entre 0,5 et 1,2 g/cm³, ou même entre 0,5 et 1,0 g/cm³, lorsqu'on mesure selon le procédé de test décrit dans la section expérimentale.

5. Composition d'adhésif sensible à la pression thermoconducteur selon l'une quelconque des revendications précédentes, qui comprend une composition de mélange de nitrure de bore comprenant :
i. un premier type d'agglomérats de particules primaires de nitrure de bore hexagonal ayant une première taille moyenne d'agglomérat d₅₀ comprise entre 100 et 420 µm, entre 110 et 400 µm, entre 310 et 410 µm, entre 200 et 290 µm, ou même entre 100 et 170 µm, en combinaison avec soit :
1. des particules primaires de nitrure de bore hexagonal ayant une taille de particule primaire d₅₀ comprise entre 3 et 25 µm, entre 5 et 25 µm, entre 10 et 20 µm, entre 10 et 18 µm, entre 12 et 18 µm, ou même entre 13 et 16 µm ; soit
2. un deuxième type d'agglomérats de particules primaires de nitrure de bore hexagonal ayant une deuxième taille moyenne d'agglomérat d₅₀ qui est inférieure à la première taille moyenne d'agglomérat d₅₀ ; et
ii. éventuellement, un troisième type d'agglomérats de particules primaires de nitrure de bore hexagonal ayant une troisième taille moyenne d'agglomérat d₅₀, dans laquelle la troisième taille moyenne d'agglomérat d₅₀ est inférieure à la première taille moyenne d'agglomérat d₅₀ et est différente de la deuxième taille moyenne d'agglomérat d₅₀.

6. Composition d'adhésif sensible à la pression thermoconducteur selon l'une quelconque des revendications précédentes, qui comprend une composition de mélange de nitrure de bore comprenant :
i. un premier type d'agglomérats de particules primaires de nitrure de bore hexagonal ayant une première taille moyenne d'agglomérat d₅₀ comprise entre 100 et 420 µm, entre 110 et 400 µm, entre 310 et 410 µm, entre 200 et 290 µm, ou même entre 100 et 170 µm ; et
ii. des particules primaires de nitrure de bore hexagonal ayant une taille de particule primaire d₅₀ comprise entre 3 et 25 µm, entre 5 et 25 µm, entre 10 et 20 µm, entre 10 et 18 µm, entre 12 et 18 µm, ou même entre 13 et 16 µm.

7. Composition d'adhésif sensible à la pression thermoconducteur selon l'une quelconque des revendications précédentes, dans laquelle la première taille moyenne d'agglomérat d₅₀ est comprise entre 100 et 350 µm, entre 100 et 300 µm, entre 100 et 250 µm, entre 100 et 200 µm, entre 100 et 180 µm, entre 100 et 170 µm, entre 110 et 160 µm, entre 110 et 150 µm, ou même entre 120 et 150 µm.

8. Composition d'adhésif sensible à la pression thermoconducteur selon l'une quelconque des revendications précédentes, dans laquelle le premier type d'agglomérats et, éventuellement, le deuxième type d'agglomérats et le troisième type d'agglomérats, sont des agglomérats isotropes.

9. Composition d'adhésif sensible à la pression thermoconducteur selon l'une quelconque des revendications précédentes, dans laquelle le premier type d'agglomérats et, éventuellement, le deuxième type d'agglomérats et/ou le troisième type d'agglomérats et/ou les particules primaires de nitrure de bore hexagonal ayant une taille moyenne de particules primaires d₅₀ comprise entre 3 et 25 µm, ne sont pas obtenus à partir de la même source de particules de nitrure de bore, en particulier par pulvérisation in situ de la même source de particules de nitrure de bore.

10. Composition d'adhésif sensible à la pression thermoconducteur selon l'une quelconque des revendications précédentes, qui comprend une composition de mélange de nitrure de bore en une quantité de pas plus de 45 % en volume, pas plus de 40 % en volume, pas plus de 35 % en volume, ou même pas plus de 30 % en volume, sur la base du volume de composition d'adhésif sensible à la pression thermoconducteur.

11. Composition d'adhésif sensible à la pression thermoconducteur selon l'une quelconque des revendications précédentes, dans laquelle le premier type d'agglomérats et, éventuellement, le deuxième type d'agglomérats, le troisième type d'agglomérats et les particules primaires de nitrure de bore hexagonal sont, au moins partiellement, en contact physique direct les uns avec les autres au sein de la composition d'adhésif sensible à la pression thermoconducteur.

12. Composition d'adhésif sensible à la pression thermoconducteur selon l'une quelconque des revendications précédentes, sous la forme d'une couche ayant une épaisseur supérieure à 400 µm, supérieure à 500 µm, supérieure à 800 µm, supérieure à 1000 µm, supérieure à 1200 µm, supérieure à 1500 µm, ou même supérieure à 1800 µm.

13. Composition d'adhésif sensible à la pression thermoconducteur selon l'une quelconque des revendications précédentes, qui a une conductivité thermique à travers le plan d'au moins 0,5 W/mK, au moins 0,8 W/mK, au moins 1,0 W/mK, au moins 1,2 W/mK, au moins 1,4 W/mK, ou même au moins 1,5 W/mK, lorsqu'on mesure selon le procédé de test décrit dans la section expérimentale.

14. Composition d'adhésif sensible à la pression thermoconducteur selon l'une quelconque des revendications précédentes, qui a une valeur de résistance au pelage à 90° comprise entre 5 et 30 N/cm, entre 5 et 25 N/cm, entre 10 et 25 N/cm, ou même entre 15 et 25 N/cm, lorsqu'on mesure selon le procédé de test décrit dans la section expérimentale.

15. Procédé de fabrication d'un adhésif sensible à la pression thermoconducteur, qui comprend les étapes consistant à :
a) fournir un matériau (co)polymérisable comprenant un monomère ester de (méth)acrylate ; et éventuellement, un co-monomère ayant un groupe à insaturation éthylénique ;
b) polymériser le matériau (co)polymérisable comprenant un monomère ester de (méth)acrylate, en formant de ce fait un matériau (co)polymérisé ayant une viscosité apte au revêtement ;
c) fournir une composition de mélange de nitrure de bore comprenant :
i. un premier type d'agglomérats de particules primaires de nitrure de bore hexagonal ayant une première taille moyenne d'agglomérat d₅₀ comprise entre 100 et 420 µm ;
ii. éventuellement, des particules primaires de nitrure de bore hexagonal ayant une taille moyenne de particules primaires d₅₀ comprise entre 3 et 25 µm ;
iii. éventuellement, un deuxième type d'agglomérats de particules primaires de nitrure de bore hexagonal ayant une deuxième taille moyenne d'agglomérat d₅₀ qui est inférieure à la première taille moyenne d'agglomérat d₅₀ ;
iv. éventuellement, un troisième type d'agglomérats de particules primaires de nitrure de bore hexagonal ayant une troisième taille moyenne d'agglomérat d₅₀, dans laquelle la troisième taille moyenne d'agglomérat d₅₀ est inférieure à la première taille moyenne d'agglomérat d₅₀ et est différente de la deuxième taille moyenne d'agglomérat d₅₀ ; et
dans lequel les particules primaires de nitrure de bore hexagonal ont une forme de plaquette ;
dans lequel les masses volumiques d'enveloppe du premier type d'agglomérats, et éventuellement, du deuxième type d'agglomérats et du troisième type d'agglomérats, sont comprises entre 0,3 et 2,2 g/cm³, lorsqu'on mesure selon le procédé de test décrit dans la section expérimentale ; et
dans lequel la teneur de la composition de mélange de nitrure de bore est supérieure à 15 % en volume, sur la base du volume de la composition d'adhésif sensible à la pression thermoconducteur ;
d) mélanger la composition de mélange de nitrure de bore et le matériau (co)polymérisé, en formant de ce fait une composition pouvant être revêtue homogène ;
e) revêtir la composition pouvant être revêtue sur un substrat, en formant de ce fait une couche d'un adhésif sensible à la pression thermoconducteur ; et
f) éventuellement, durcir la couche de l'adhésif sensible à la pression thermoconducteur.

16. Procédé selon la revendication 15, dans lequel le premier type d'agglomérats, et éventuellement, le deuxième type d'agglomérats et/ou le troisième type d'agglomérats et/ou les particules primaires de nitrure de bore hexagonal ayant une taille moyenne de particules primaires d₅₀ comprise entre 3 et 25 µm, ne sont pas obtenus à partir de la même source de particules de nitrure de bore, en particulier par pulvérisation in situ de la même source de particules de nitrure de bore.

17. Utilisation d'une composition d'adhésif sensible à la pression thermoconducteur selon l'une quelconque des revendications 1 à 14 pour des applications industrielles, en particulier pour des applications de régulation thermique.
